(19) Europäisches Patentamt
European Patent Office
Office européen des brevets

(11) Veröffentlichungsnummer: **0 324 373 B1**

(12) EUROPÄISCHE PATENTSCHRIFT

(45) Veröffentlichungstag der Patentschrift: **08.12.93**

(51) Int. Cl.5: **C09B 62/085**, C09B 62/51, D06P 1/38

(21) Anmeldenummer: **89100121.6**

(22) Anmeldetag: **05.01.89**

Die Akte enthält technische Angaben, die nach dem Eingang der Anmeldung eingereicht wurden und die nicht in dieser Patentschrift enthalten sind.

# (54) Wasserlösliche Azoverbindungen, Verfahren zu ihrer Herstellung und ihre Verwendung als Farbstoffe.

(30) Priorität: **13.01.88 DE 3800692**

(43) Veröffentlichungstag der Anmeldung: **19.07.89 Patentblatt 89/29**

(45) Bekanntmachung des Hinweises auf die Patenterteilung: **08.12.93 Patentblatt 93/49**

(84) Benannte Vertragsstaaten: **BE CH DE ES FR GB IT LI**

(56) Entgegenhaltungen:
**EP-A- 316 722**
**DE-C- 965 902**
**FR-A- 641 816**

(73) Patentinhaber: **HOECHST AKTIENGESELLSCHAFT**

**D-65926 Frankfurt(DE)**

(72) Erfinder: **Springer, Hartmut, Dr.**
**Am Erdbeerstein 27**
**D-6240 Königstein/Taunus(DE)**
Erfinder: **Hussong, Kurt, Dr.**
**Am Flachsland 56**
**D-6233 Kelkheim (Taunus)(DE)**

EP 0 324 373 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung liegt auf dem technischen Gebiet der faserreaktiven Farbstoffe.

In der deutschen Patentschrift Nr. 965 902 wird u.a. ein Verfahren zum Färben von Fasermaterialien beschrieben, bei welchem Farbstoffe eingesetzt werden, die eine β-Sulfatoethylsulfonyl-Gruppe als faserreaktive Gruppe besitzen. Unter der Vielzahl von in dieses Verfahren einsetzbaren Farbstoffen mit unterschiedlichster chemischer Konstitution wird im Beispiel 43 ein Azofarbstoff genannt, der aus dem 2-Hydroxy-3-carboxy-naphthalin als Kupplungskomponente und aus dem 2-Methoxy-5-(β-sulfatoethylsulfonyl)-anilin als Diazokomponente aufgebaut ist. Farbstoffe mit der 2-Hydroxy-3-carboxy-naphthalin-Kupplungskomponente und mit einer 2-Hydroxy-6-carboxy-naphthalin-Kupplungskomponente, jedoch ohne faserreaktive Gruppierungen und Eigenschaften, werden in der französischen Patentschrift Nr. 641 816 erwähnt; das Färben mit den Farbstoffen der letztgenannten Kupplungskomponente erfolgt in Gegenwart von Chromsalzen. Darüberhinaus ist in der nicht vorveröffentlichten, älteren europäischen Patentanmeldung Nr. 88 118 606.8 (entsprechend EP-A-0 316 722) im Tabellenbeispiel 30 ein Azofarbstoff mit einer 2-Hydroxy-6-carboxy-naphthalin-Kupplungskomponente und einem 3-[2'-Chlor-6'-(2",5"-disulfophenyl)-amino-1',3',5'-triazin-4'-(N-methyl)-amino]-4-sulfo-phen-1-yl-Rest beschrieben.

Mit der vorliegenden Erfindung wurden neue, wertvolle faserreaktive Monoazoverbindungen gefunden, die faserreaktive Farbstoffeigenschaften besitzen und der allgemeinen Formel (1)

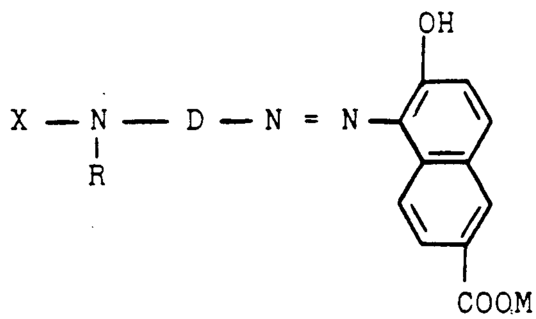

(1)

entsprechen, in welcher bedeuten:

- D ist eine para- oder meta-Phenylengruppe, die durch 1 Carboxygruppe oder 1 oder 2 Sulfogruppen substituiert ist, oder ist eine Naphthylengruppe, die in 1- oder 2-Stellung die Azogruppe gebunden enthält und an die in 5- oder 6-Stellung die Gruppierung X-N(R)- gebunden ist und die durch 1 Carboxygruppe oder 1 oder 2 Sulfogruppen substituiert ist;
- R ist ein Wasserstoffatom oder eine Alkylgruppe von 1 bis 4 C-Atomen, wie die Methyl- oder Ethylgruppe, oder eine durch eine Hydroxy-, Cyano-, Carboxy-, Sulfo-, Sulfato- oder Phosphatogruppe oder Phenyl- oder Sulfophenylgruppe substituierte Alkylgruppe von 1 bis 4 C-Atomen, wie beispielsweise die Benzyl-, Phenethyl-, β-Cyanoethyl-, β-Carboxyethyl-, β-Sulfoethyl-, β-Sulfatoethyl-, β-Phosphatoethyl- oder Sulfomethyl-Gruppe, bevorzugt hiervon ein Wasserstoffatom und die Methylgruppe;
- M ist ein Wasserstoffatom oder ein Alkalimetall oder das Äquivalent eines zweiwertigen Metalls, wie des Erdalkalimetalls, wie beispielsweise des Calciums, bevorzugt jedoch ein Wasserstoffatom oder ein Alkalimetall, wie Natrium, Kalium oder Lithium;
- X ist eine Gruppe der allgemeinen Formel (2)

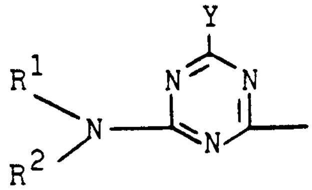

(2)

in welcher

Y ein Halogenatom, wie ein Fluoratom und insbesondere ein Chloratom, ist,

$R^1$ ein Wasserstoffatom oder eine Alkylgruppe von 1 bis 4 C-Atomen, wie die Ethyl- oder Methylgruppe, oder eine Alkylgruppe von 1 bis 4 C-Atomen ist, die durch eine Sulfo-, Carboxy-, Phosphato-, Sulfato-, Hydroxy- oder Cyanogruppe und/oder durch einen gegebenenfalls durch Sulfo, Carboxy, Alkyl von 1 bis 4 C-Atomen, Alkoxy von 1 bis 4 C-Atomen, Chlor und/oder Nitro substituierten Phenyl- oder Naphthylrest substituiert ist, und

$R^2$ ein Wasserstoffatom oder eine Alkylgruppe von 1 bis 4 C-Atomen, wie die Ethyl- oder Methylgruppe, oder eine Alkylgruppe von 1 bis 4 C-Atomen ist, die durch eine Sulfo-, Carboxy-, Phosphato-, Sulfato-, Hydroxy-, Cyano- oder einen gegebenenfalls durch Sulfo, Carboxy, Alkyl von 1 bis 4 C-Atomen, Alkoxy von 1 bis 4 C-Atomen, Chlor und/oder Nitro substituierten Phenyl- oder Naphthylrest substituiert ist, oder einen Phenylrest bedeutet, der durch 1, 2 oder 3 Substituenten substituiert sein kann, die aus der Gruppe der folgenden Substituenten ausgewählt sind: 2 Alkyl von 1 bis 4 C-Atomen, wie Ethyl und insbesondere Methyl, 2 Alkoxy von 1 bis 4 C-Atomen, wie Ethoxy und Methoxy, 1 Brom, 2 Chlor, 3 Sulfo, 2 Carboxy, 1 Nitro, 1 Alkylsulfonyl von 1 bis 4 C-Atomen, das durch Hydroxy substituiert sein kann (wie bspw. $\beta$-Hydroxyethylsulfonyl), 1 Alkylamino von 1 bis 4 C-Atomen und 1 Alkylamino von 1 bis 4 C-Atomen, das im Alkylrest durch Hydroxy, Sulfato, Sulfo, Phosphato, Alkanoyloxy von 2 bis 5 C-Atomen oder durch carboxysubstituiertes Alkanoylamido von 1 bis 4 C-Atomen im Alkylenrest, wie Succinamido, substituiert sein kann; oder $R^2$ einen Monosulfo-, Disulfo- oder Trisulfo-naphthyl-Rest bedeutet,

wobei $R^1$ und $R^2$ zueinander gleiche oder voneinander verschiedene Bedeutungen besitzen können, oder

$R^1$ und $R^2$ zusammen mit dem Stickstoffatom einen aus einem Alkylenrest von 3 bis 8 C-Atomen, bevorzugt 4 bis 6 C-Atomen, oder einem weiteren Heteroatom, wie einem Stickstoffatom oder Sauerstoffatom, und zwei Alkylenresten von 1 bis 4 C-Atomen aufgebauten heterocyclischen Rest bilden, wie beispielsweise den Piperidino-, Piperazino- oder Morpholino-Rest,

wobei die Verbindung der Formel (1) mit $R^1$ gleich Wasserstoff, $R^2$ gleich 2,5-Disulfophenyl, Y gleich Chlor, R gleich Methyl und D gleich 2-Sulfo-1,3-phenylen gemäß Beispiel 30 der EP-A-0 316 722 ausgenommen ist.

Substituierte Alkylaminogruppen als Substituenten in einem Phenylrest von $R^2$ sind beispielsweise die $\beta$-Sulfoethyl-amino- und die $\beta$-Succinamidoethyl-amino-Gruppe.

Von den erfindungsgemäßen Azoverbindungen der allgemeinen Formel (1) sind insbesondere bevorzugt solche, in welchen R für ein Wasserstoffatom steht, des weiteren solche, in welchen D die meta- oder para-Phenylengruppe ist, die durch 1 oder 2 Sulfogruppen substituiert sind, des weiteren solche, in welchen $R^1$ ein Wasserstoffatom ist und $R^2$ ein Phenylrest ist, der durch eine Sulfogruppe substituiert ist und zusätzlich durch eine weitere Sulfogruppe oder eine Methoxygruppe substituiert sein kann.

Sulfogruppen sind Gruppen entsprechend der allgemeinen Formel $-SO_3M$ , Carboxygruppen sind Gruppen entsprechend der allgemeinen Formel -COOM , Sulfatogruppen sind Gruppen entsprechend der allgemeinen Formel $-OSO_3M$ und Phosphatogruppen sind Gruppen entsprechend der allgemeinen Formel $-OPO_3M_2$ , in welchen M eine der obengenannten Bedeutungen besitzt.

Die neuen Azoverbindungen können in saurer Form und in Form ihrer Salze vorliegen. Bevorzugt sind sie in Form ihrer Salze, insbesondere der Alkali- und Erdalkalimetallsalze, und finden auch bevorzugt in Form dieser Salze Verwendung zum Färben (hier und im folgenden im allgemeinen Sinne und einschließlich des Bedruckens verstanden) von hydroxy- und/oder carbonamidgruppenhaltigen Materialien, insbesondere Fasermaterialien.

Die vorliegende Erfindung betrifft weiterhin Verfahren zur Herstellung der Verbindungen der allgemeinen Formel (1), die dadurch gekennzeichnet sind, daß man

a) eine Verbindung der allgemeinen Formel (3)

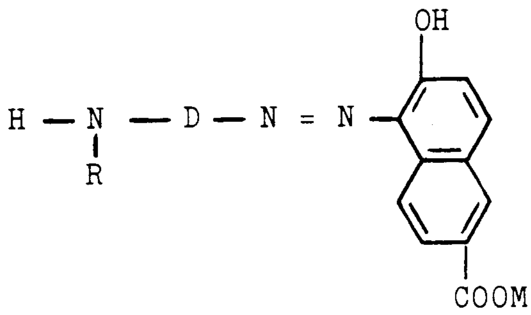

(3)

in welcher R, D und M die obengenannten Bedeutungen haben, in an und für sich bekannter Verfahrensweise mit einer Verbindung der allgemeinen Formel (4)

X—Y (4)

in welcher X und Y die obengenannten Bedeutungen besitzen, umsetzt
oder daß man
b) eine aromatische Aminoverbindung der allgemeinen Formel (5)

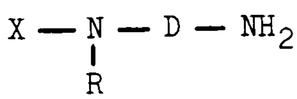

(5)

in welcher X, R und D die obengenannten Bedeutungen haben, diazotiert und mit der 2-Naphthol-6-carbonsäure oder einem Salz dieser Carbonsäure kuppelt,
oder daß man
c) eine Verbindung der allgemeinen Formel (6)

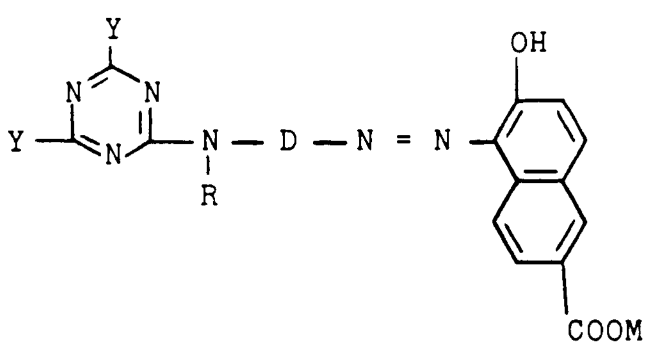

(6)

in welcher beide Y sowie R, D und M die obengenannten Bedeutungen haben, mit einer Aminoverbindung der allgemeinen Formel $HNR^1R^2$ mit $R^1$ und $R^2$ der obengenannten Bedeutung umsetzt.

Die Reaktionsbedingungen der Verfahrensweisen a) und c) sind analog bekannten Verfahrensweisen der Umsetzung von Aminoverbindungen mit Dihalogen-triazinyl-amino-Verbindungen, so in wäßrigem oder wäßrig-organischem Medium (wobei der organische Lösemittelanteil ein unter den Reaktionsbedingungen inertes, bevorzugt wasserlösliches Lösemittel ist, wie beispielsweise Aceton, Dimethylformamid und Dimethylsulfoxid) bei einem pH-Wert zwischen 1 und 7, insbesondere 2 und 6, und einer Temperatur zwischen -10 °C und +80 °C, insbesondere -10 °C und +50 °C. In gleicher Weise erfolgt die Diazotierungs- und Kupplungsreaktion gemäß der Verfahrensvariante b) in üblicher Weise, so die Diazotierung bei einer Temperatur zwischen -5 °C und +20 °C bei einem pH-Wert von 2 oder kleiner als 2 und die Kupplungsreaktion bei einer Temperatur zwischen 5 und 25 °C und einem pH-Wert zwischen 4 und 8, bevorzugt zwischen 5 und 7, jeweils bevorzugt in wäßrigem Medium.

Die Ausgangsverbindungen der allgemeinen Formel (3) lassen sich analog bekannten Verfahrensweisen leicht durch Kupplung des diazotierten Amins H(R)N-D-$NH_2$ mit D und R der obengenannten Bedeutung mit der 2-Hydroxy-naphthalin-6-carbonsäure oder einem Salz dieser Carbonsäure entsprechend den obigen Reaktionsbedingungen der Diazotierung und Kupplung herstellen. Sowohl diese Diaminoverbindungen als auch die 2-Naphthol-6-carbonsäure sind allgemein bekannt und in der Literatur beschrieben.

Ebenso sind die den faserreaktiven Rest X bzw. den Dihalogen-triazin-Rest enthaltenden Ausgangs-Aminoverbindungen entsprechend der allgemeinen Formel (5) allgemein bekannt; sie können durch Umsetzung der entsprechenden Diaminoverbindung der allgemeinen Formel H(R)N-D-$NH_2$ mit D und R der obengenannten Bedeutung mit einer Amino-halogen-triazin-Verbindung entsprechend der allgemeinen Formel (4) bzw. mit Cyanurchlorid oder Cyanurfluorid hergestellt werden. Ebenso lassen sich die Ausgangsverbindungen der allgemeinen Formel (6) analog anderen Azoverbindungen, die solch einen Dihalogentriazinylamino-Rest gebunden enthalten, herstellen, indem man eine Aminoazoverbindung entsprechend der allgemeinen Formel (3) mit Cyanurchlorid oder Cyanurfluorid umsetzt. Verfahrensbedingungen für solche Reaktionen sind allgemein bekannt und entsprechen im wesentlichen den Verfahrensbedingungen, die später für die Reaktionen zwischen den Ausgangsverbindungen (3) und (4) oder der Ausgangsverbindung (6) und der Aminoverbindung $HNR^1R^2$ angegeben sind.

Zur Neutralisierung der bei den Kondensationsreaktionen freiwerdenden Halogenwasserstoffe verwendet man in der Regel Alkali- und Erdalkalicarbonate, Alkali- und Erdalkalihydrogencarbonate oder Alkali- oder Erdalkalihydroxide oder auch Alkaliacetate, wobei die Alkali- und Erdalkalimetalle vorzugsweise solche des Natriums, Kaliums und Calciums sind; säurebindende Mittel sind ebenso tertiäre Amine, wie beispielsweise Pyridin oder Triethylamin oder Chinolin.

Die erfindungsgemäße Umsetzung der Aminoazoverbindungen der allgemeinen Formel (3) mit einer Amino-dihalogen-triazin-Verbindung der allgemeinen Formel (4) erfolgt im Falle, daß Y für ein Chloratom steht, in der Regel bei einem pH-Wert zwischen 4 und 7, bevorzugt zwischen 5 und 6, und bei einer Temperatur zwischen 0 und 50 °C, bevorzugt zwischen 10 und 40 °C, insbesondere bevorzugt zwischen 10 und 30 °C, und im Falle, daß Y für ein Fluoratom steht, in der Regel bei einem pH-Wert zwischen 4 und 7, bevorzugt zwischen 5 und 6, und bei einer Temperatur zwischen -10 °C und +40 °C, vorzugsweise zwischen -10 °C und +30 °C, insbesondere bevorzugt zwischen 0 °C und +10 °C.

Die erfindungsgemäße Umsetzung von Dihalogen-triazinylamino-Azoverbindungen entsprechend der allgemeinen Formel (6) mit einer Aminoverbindung der allgemeinen Formel $R^1R^2NH$ mit $R^1$ und $R^2$ der obengenannten Bedeutung erfolgt in der Regel im Falle, daß Y für ein Chloratom steht in der Regel bei einem pH-Wert zwischen 4 und 7, bevorzugt zwischen 5 und 6, und bei einer Temperatur zwischen 0 und 50 °C, bevorzugt zwischen 10 und 40 °C, insbesondere bevorzugt zwischen 10 und 30 °C, und im Falle, daß Y für ein Fluoratom steht, in der Regel bei einem pH-Wert zwischen 4 und 7, bevorzugt zwischen 5 und 6, und bei einer Temperatur zwischen -10 °C und +40 °C, vorzugsweise zwischen -10 °C und +30 °C, insbesondere bevorzugt zwischen 0 °C und +10 °C.

Amino-Ausgangsverbindungen entsprechend der allgemeinen Formel $R^1R^2NH$ sind beispielsweise 2-Sulfo-anilin, 3-Sulfo-anilin, 4-Sulfo-anilin, 2,4-Disulfo-anilin, 2,5-Disulfo-anilin, 5-Sulfo-2-methoxy-anilin, 4-Sulfo-2-methoxy-anilin, 5-Sulfo-2-methyl-anilin, 4-Sulfo-2-methyl-anilin, 3-Sulfo-4-methoxy-anilin, 4-Sulfo-2-methoxy-5-methyl-anilin, 4-Sulfo-2,5-dimethoxy-anilin, 5-Sulfo-2,4-dimethoxy-anilin, 4-Sulfo-5-methoxy-2-methyl-anilin, 5-Sulfo-2-chlor-anilin, 3-Sulfo-4-chlor-2-methyl-anilin, 4-Sulfo-5-chlor-2-methoxy-anilin, 5- oder 6-Sulfo-2-amino-naphthalin, 6,8-Disulfo-2-amino-naphthalin, 3,6,8-Trisulfo-2-amino-naphthalin, 8-Sulfo-2-amino-naphthalin, 4,6,8-Trisulfo-2-amino-naphthalin, 1,5- oder 1,6-Disulfo-2-amino-naphthalin, 4,8-Disulfo-2-amino-naphthalin, 6,7-Disulfo-2-amino-naphthalin, 5,7-Disulfo-2-amino-naphthalin, 5- oder 6-Sulfo-1-amino-naphthalin, 7-Sulfo-1-amino-naphthalin, 1-Sulfo-2-amino-naphthalin, 3,6- oder 4,6- oder 4,8-Disulfo-1-amino-naphthalin, $\beta$-Sulfo-ethylamin, $\beta$-Hydroxy-ethylamin, N-Methyl-N-($\beta$-sulfatoethyl)-amin, Methyl-ethyl-amin, Dimethylamin, Diethylamin, $\beta$-Carboxy-ethylamin, 4-Sulfobenzylamin, 4-Sulfo-phenethyl-amin, Benzylamin, 2-Methylanilin, Anilin, 4-Chlor-anilin, N-($\beta$-Hydroxyethyl)-anilin, N-Ethyl-anilin, N-Methyl-anilin, Ammoniak, Morpholin, Piperidin und Piperazin.

Diamino-Ausgangsverbindungen entsprechend der allgemeinen Formel H(R)N-D-$NH_2$ sind beispielsweise 4,6-Disulfo-1,3-diaminobenzol, 2,5-Disulfo-1,4-diaminobenzol, 4-Sulfo-1,3-diaminobenzol, 2-Sulfo-1,4-diaminobenzol, 4-Carboxy-1,3-diaminobenzol, 2-Carboxy-1,4-diaminobenzol, 2-Sulfo-4-(methylamino)-anilin, 4-Sulfo-3-(methylamino)-anilin, 2-Sulfo-4-(ethylamino)-anilin, 4-Sulfo-3-(ethylamino)-anilin, 4-N-($\beta$-Sulfoethyl)-amino-anilin, 4,8-Disulfo-1,6-diamino-naphthalin und 4,8-Disulfo-2,6-diamino-naphthalin.

Die Abscheidung und Isolierung der erfindungsgemäß hergestellten Azoverbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei der Syntheselösung eine Puffersubstanz zugefügt werden kann.

Die erfindungsgemäßen Azoverbindungen der allgemeinen Formel (1) - im nachfolgenden Verbindungen (1) genannt - haben, wie bereits erwähnt, faserreaktive Farbstoffeigenschaften. Sie können deshalb zum Färben (einschließlich Bedrucken) von hydroxygruppenhaltigen und/oder carbonamidgruppenhaltigen Materialien, insbesondere Fasermaterialien, verwendet werden. Auch können die bei der Synthese der Verbindungen (1) anfallenden Lösungen, gegebenenfalls nach Zusatz einer Puffersubstanz und gegebenenfalls auch nach Konzentriertung, direkt als Flüssigpräparation der färberischen Verwendung zugeführt werden.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die Verbindungen lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man eine Verbindung (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind sowohl in der Fachliteratur als auch in der Patentliteratur zahlreich beschrieben, wie beispielsweise in der Europäischen Patentanmeldungs-Veröffentlichung Nr. 0 181 585A.

Mit den Verbindungen (1) lassen sich sowohl auf carbonamidgruppenhaltigen Materialien, wie insbesondere auf Wolle, als auch auf hydroxygruppenhaltigem Material, wie insbesondere Cellulosefasermaterial, gelbstichig bis blaustichig rote Färbungen und Drucke mit hoher Farbausbeute und gutem Farbaufbau, wobei die brillante Nuance auch in tiefen Tönen erhalten bleibt, herstellen. Die Färbungen und Drucke besitzen gute Echtheitseigenschaften, wie gute Licht- und Naßechtheitseigenschaften und eine gute Plissierechtheit, Bügelechtheit und Reibechtheit.

Von den Färbungen und Drucken auf carbonamidgruppenhaltigem Material, wie insbesondere auf Wolle, können die Licht-, Wasch- und Naßlichtechtheiten hervorgehoben werden, selbst wenn auf eine ansonsten übliche ammoniakalische Nachbehandlung der gefärbten Ware verzichtet wird. Mit anderen faserreaktiven Wollfarbstoffen zeigen sie eine gute Kombinierbarkeit, was ein egales Farben der Faser ermöglicht. Ebenso läßt sich Material aus Wollfasern unterschiedlicher Provinienz mit den Verbindungen (1) egal färben, wobei gegebenenfalls zur Verbesserung des Egalisierverhaltens ein übliches Egalisierhilfsmittel, wie beispielsweise N-Methyl-taurin zugesetzt werden kann.

Bevorzugt dienen die Verbindungen (1) zum Färben von Cellulosefasermaterialien. Von den hierauf erzielbaren guten Echtheitseigenschaften sind insbesondere die guten Waschechtheiten bei 60 bis 95 °C, auch in Gegenwart von Perboraten, die sauren Walk-, Überfärbe- und Schweißechtheiten, die hohe Dampfbeständigkeit und die guten Säure-, Wasser- und Seewasserechtheiten zu nennen.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die im sichtbaren Bereich angegebenen Absorptionsmaxima ($\lambda_{max}$-Werte) wurden bei 20 °C aus wäßriger Lösung der Alkalimetallsalze bestimmt.

**Beispiel 1**

a) Eine Lösung mit einem pH-Wert von 6 von 91 Teilen Anilin-4-sulfonsäure in 500 Teilen Wasser wird in eine Suspension von 100 Teilen Cyanurchlorid und 3 Teilen eines handelsüblichen Netzmittels in 800 Teilen Eis und Wasser eingerührt. Man rührt noch einige Zeit bei einer Temperatur zwischen 0 und 5 °C weiter und hält hierbei den pH-Wert mittels Natriumbicarbonat zwischen 3,5 und 4,5. Der Umsetzungsgrad der Acylierungsreaktion ist 99 % und größer.

b) Der unter a) hergestellte Reaktionsansatz wird zu einer Lösung mit einem pH-Wert zwischen 6 und 7 von 134 Teilen 1,3-Diaminobenzol-4,6-disulfonsäure in etwa 600 Teilen Wasser eingerührt; das Reaktionsgemisch wird auf 40 °C erwärmt und bei einer Temperatur zwischen 40 und 45 °C weitergerührt, wobei der pH-Wert mittels Natriumbicarbonat zwischen 5 und 6 gehalten wird, bis die Diaminoverbindung praktisch nicht mehr nachweisbar ist.

c) Der aus der zweiten Acylierungsreaktion unter b) erhaltene Ansatz wird mit 1000 Teilen Eis und 150 Volumenteilen einer wäßrigen 31%igen Salzsäure versetzt und mit einer wäßrigen Lösung von 35 Teilen Natriumnitrit diazotiert. Das erhaltene Diazotierungsgemisch wird in eine Lösung mit einem pH-Wert zwischen 6 und 6,5 aus 94 Teilen 2-Naphthol-6-carbonsäure in etwa 1100 Teilen Wasser unter Rühren gegeben und der pH-Wert auf etwa 5 eingestellt und während der gesamten Kupplungsreaktion zwischen 4,5 und 6 mittels Natriumbicarbonat gehalten. Bis zur beendeten Kupplung wird noch einige Zeit weitergerührt.

Die so hergestellte erfindungsgemäße Monoazoverbindung wird in üblicher Weise isoliert, beispielsweise durch Eindampfen oder Sprühtrocknung der neutralen Syntheselösung oder durch Aussalzen mit Natriumchlorid oder Kaliumchlorid. Man erhält ein elektrolythaltiges oranges Pulver des Alkalimetallsalzes der Verbindung der Formel

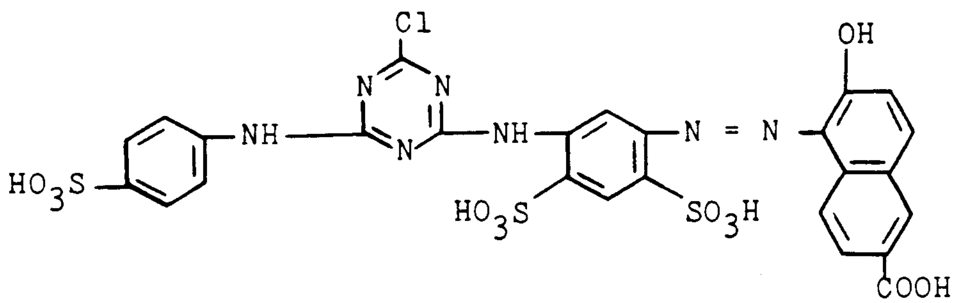

$(\lambda_{max} = 478\ nm)$

die sehr gute faserreaktive Farbstoffeigenschaften zeigt und auf den in der Beschreibung genannten Materialien, wie insbesonderen Cellulosefasermaterialien, beispielsweise Baumwolle, nach den in der Technik üblichen Applikations- und Fixiermethoden, insbesondere den für faserreaktive Farbstoffe beschriebenen und angewandten Anwendungsbedingungen, farbstarke klare orange-farbene Färbungen und Drucke mit guten Lichtechtheitseigenschaften und guten Naßechtheiten, wie insbesondere guten Wasch-, Walk-, Schweiß- und Überfärbeechtheiten, liefern.

**Beispiel 2**

a) Eine Lösung von 39 Teilen Cyanurchlorid in 150 Volumenteilen Aceton läßt man unter Rühren auf 300 Teile Eis fließen; in diese Suspension gibt man unter Rühren etwa 1000 Volumenteile einer wäßrigen, weniger als 10 °C kalten, neutralen Lösung von 108 Teilen einer aus 4,6-Disulfo-1,3-diaminobenzol als Diazokomponente und 2-Naphthol-6-carbonsäure als Kupplungskomponente aufgebauten Aminoazoverbindung. Man rührt den Ansatz noch etwa 4 Stunden bei 0 bis 10 °C und unter Einhaltung eines pH-Wertes zwischen 4 und 5 weiter, bis praktisch kein Amin mehr nachweisbar ist.

b) 400 Volumenteile einer wäßrigen neutralen Lösung von 37 Teilen 3-Sulfo-anilin werden in den unter a) hergestellten Reaktionsansatz eingerührt. Anschließend erwärmt man die Reaktionsmischung innerhalb von 2 Stunden auf eine Temperatur von 40 bis 45 °C und rührt den Ansatz noch etwa 12 Stunden bei 40 bis 50 °C unter Einhaltung eines pH-Wertes zwischen 4,5 und 5 bis zur Beendigung der Acylierungsreaktion weiter.

Man isoliert die erfindungsgemäße Azoverbindung der Formel

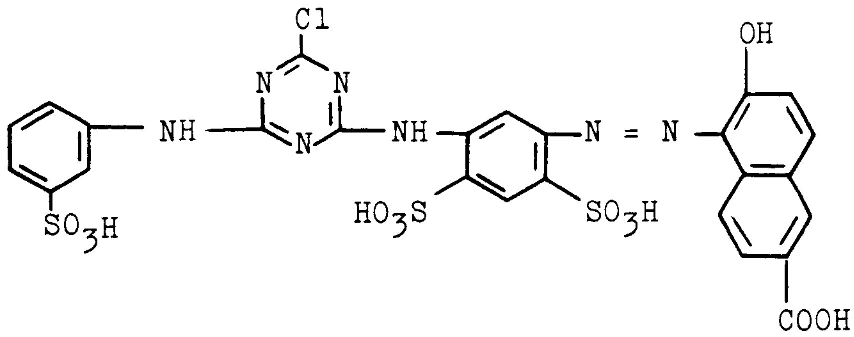

($\lambda_{max}$ = 479 nm)

in Form des Alkalimetallsalzes als elektrolythaltiges oranges Pulver. Sie zeigt sehr gute faserreaktive Farbstoffeigenschaften und liefert auf den in der Beschreibung genannten Materialien, wie insbesondere Cellulosefasermaterialien, beispielsweise Baumwolle, nach den in der Technik üblichen Applikations- und Fixiermethoden, insbesondere den für faserreaktive Farbstoffe beschriebenen und angewandten Anwendungsbedingungen, farbstarke klare orange-farbene Färbungen und Drucke mit guten Lichtechtheitseigenschaften und guten Naßechtheiten, wie insbesondere guten Wasch-, Walk-, Schweiß- und Überfärbeechtheiten.

**Beispiel 3**

Man setzt gemäß der Verfahrensweise des Beispieles 1a) Anilin-4-sulfonsäure mit Cyanurchlorid um und gibt den erhaltenen Syntheseansatz unter Rühren zu einer Lösung mit einem pH-Wert zwischen 6 und 7 von 98 Teilen 1,3-Diaminobenzol-4-sulfonsäurein etwa 600 Teilen Wasser; das Reaktionsgemisch wird auf 40 °C erwärmt und bei einer Temperatur zwischen 40 und 45 °C weitergerührt, wobei der pH-Wert mittels Natriumbicarbonat zwischen 5 und 6 gehalten wird, bis die Diaminoverbindung praktisch nicht mehr nachweisbar ist.

Der aus dieser zweiten Acylierungsreaktion erhaltene Ansatz wird mit 1000 Teilen Eis und 150 Volumenteilen einer wäßrigen 31%igen Salzsäure versetzt und mit einer wäßrigen Lösung von 35 Teilen Natriumnitrit diazotiert. Das Diazotierungsgemisch wird sodann unter Rühren in eine Lösung mit einem pH-Wert zwischen 6 und 6,5 aus 94 Teilen 2-Naphthol-6-carbonsäure in etwa 1100 Teilen Wasser und 45 Teilen einer wäßrigen Natronlauge gegeben, wobei der pH-Wert mittels Natriumbicarbonat zwischen 4,5 und 6 während der gesamten Kupplungsreaktion gehalten wird. Bis zur beendeten Kupplung wird noch einige Zeit weitergerührt.

Die erfindungsgemäße Monoazoverbindung wird in üblicher Weise isoliert, beispielsweise durch Eindampfen oder Sprühtrocknung der neutralen Syntheselösung oder durch Aussalzen mit einem Elektrolytsalz, wie beispielsweise Kaliumchlorid. Man erhält ein elektrolythaltiges rotes Pulver des Alkalimetallsalzes, wie beispielsweise Kaliumsalzes, der Verbindung der Formel

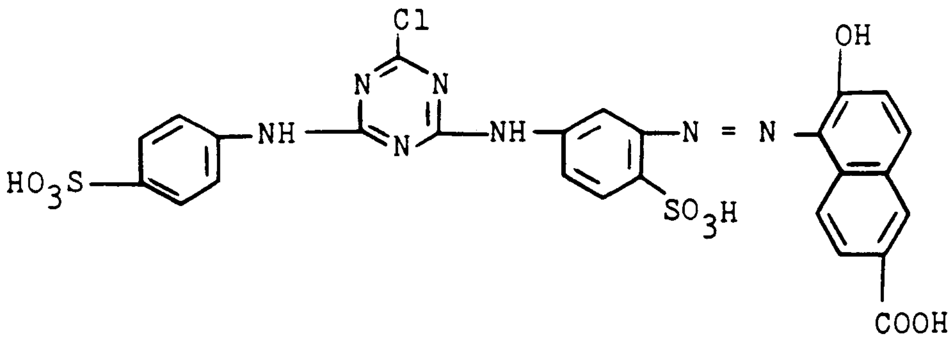

( $\lambda_{max}$ = 501 nm)

die sehr gute faserreaktive Farbstoffeigenschaften zeigt und auf den in der Beschreibung genannten Materialien, wie insbesonderen Cellulosefasermaterialien, wie Baumwolle, nach den in der Technik üblichen Anwendungsmethoden farbstarke, klare rote Färbungen und Drucke von guten Lichtechtheiten und guten Naßechtheitseigenschaften, wie insbesondere guten Wasch-, Walk-, Schweiß- und Uberfärbeechtheiten, liefern.

**Beispiel 4**

a) Man stellt zunächst das zweifache Kondensationsprodukt aus Cyanurfluorid mit 2,4-Disulfo-anilin und 4-Sulfo-1,3-diaminobenzol her: Eine Lösung von 0 °C des Natriumsalzes von 25,3 Teilen 2,4-Disulfo-anilin in 150 Teilen Wasser versetzt man langsam innerhalb von 5 bis 10 Minuten unter Einhaltung eines pH-Wertes zwischen 5 und 5,5 und unter gutem Rühren mit 13,6 Teilen Cyanurchlorid. Man rührt anschließend bei dieser Temperatur und diesem pH-Wert noch 5 bis 10 Minuten nach, bis kein diazotierbares Amin mehr nachweisbar ist. Anschließend gibt man die kalte Lösung dieses Monokondensationsproduktes unter gutem Rühren innerhalb von 15 bis 20 Minuten zu einer Lösung von 15 bis 20 °C des Natriumsalzes von 19 Teilen 1,3-Diaminobenzol-4-sulfonsäure in 200 Teilen Wasser. Man rührt den Ansatz noch eine Stunde bei einer Temperatur zwischen 15 und 25 °C und einem pH-Wert zwischen 5 und 6 nach.

Das zweifache Kondensationsprodukt wird gemäß den Angaben des Beispieles 1c) diazotiert und mit 2-Naphthol-6-carbonsäure gekuppelt und isoliert. Man erhält das Kalium-/Natriumsalz der Verbindung der Formel

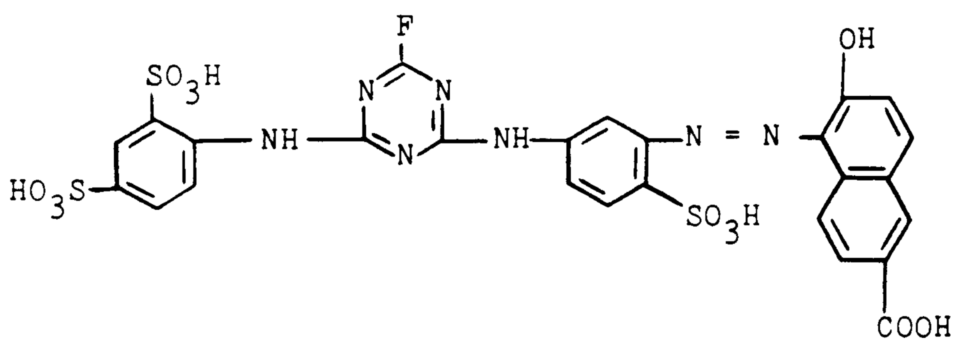

( $\lambda_{max}$ = 504 nm)

Diese erfindungsgemäße Azoverbindung besitzt sehr gute faserreaktive Farbstoffeigenschaften und färbt die in der Beschreibung genannten Materialien, insbesondere Wolle, einschließlich filzarm ausgerüsteter Wolle, in brillanten roten Tönen mit gutem Farbaufbau und guten Echtheitseigenschaften.

**Beispiele 5 bis 229**

In den nachfolgenden Tabellenbeispielen sind weitere erfindungsgemäße Monoazoverbindungen entsprechend der allgemeinen Formel (A)

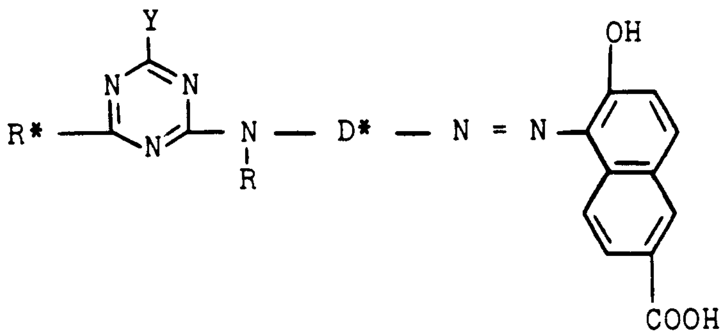

(A)

mit Hilfe ihrer Komponenten beschrieben. Sie lassen sich in erfindungsgemäßer Weise, wie beispielsweise nach einer der in den Beispielen 1 bis 4 beschriebenen Verfahrensweise aus den entsprechenden Ausgangsverbindungen (der 2-Naphthol-6-carbonsäure als Kupplungskomponente, der Diaminoverbindung der allgemeinen Formel $H(R)N-D-NH_2$ , Cyanurchlorid oder Cyanurfluorid und einer Aminoverbindung entsprechend der Formel R*-H ) herstellen. Sie zeigen sehr gute Farbstoffeigenschaften und liefern auf den in der Beschreibung genannten Materialien, wie insbesondere Cellulosefasermaterialien, beispielsweise Baumwolle, und ebenfalls auf Wolle farbstarke Färbungen und Drucke mit guten Echtheitseigenschaften mit dem in dem jeweiligen Tabellenbeispiel angegebenen Farbton (dort für eine Baumwollfärbung).

| Bsp. | Monoazoverbindung der Formel (A) Rest R*- | Rest Y | Rest -D*- | Rest R- | Farbton |
|---|---|---|---|---|---|
| 5 | 2-Sulfo-phenylamino | Chlor | 4,6-Disulfo-1,3-phenylen | Wasserstoff | orange |
| 6 | 2,4-Disulfo-phenylamino | Chlor | 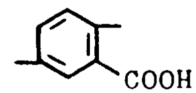 | Wasserstoff | orange |
| 7 | 2,4-Disulfo-phenylamino | Chlor | 4,6-Disulfo-1,3-phenylen | Wasserstoff | orange |
| 8 | 2,5-Disulfo-phenylamino | Chlor | dito | dito | orange |
| 9 | 4-Sulfo-2-methoxy-phenylamino | Chlor | dito | dito | orange |
| 10 | 5-Sulfo-2-methyl-phenylamino | Chlor | dito | dito | orange |
| 11 | 4-Sulfo-2-methyl-phenylamino | Chlor | dito | dito | orange |
| 12 | 3-Sulfo-4-methoxy-phenylamino | Chlor | dito | dito | orange |
| 13 | 4-Sulfo-2-methoxy-5-methyl-phenyl-amino | Chlor | dito | dito | orange |
| 14 | 4-Sulfo-2,5-dimethoxy-phenylamino | Chlor | dito | dito | orange |
| 15 | 5-Sulfo-2,4-dimethoxy-phenylamino | Chlor | dito | dito | orange |

| Bsp. | Monoazoverbindung der Formel (A)<br>Rest R*- | Rest Y | Rest -D*- | Rest R- | Farbton |
|---|---|---|---|---|---|
| 16 | 4-Sulfo-5-methoxy-2-methyl-phenylamino | Chlor | 4,6-Disulfo-1,3-phenylen | Wasserstoff | orange |
| 17 | 5-Sulfo-2-chlor-phenylamino | Chlor | dito | dito | orange |
| 18 | 3-Sulfo-4-chlor-2-methyl-phenylamino | Chlor | dito | dito | orange |
| 19 | 4-Sulfo-5-chlor-2-methoxy-phenylamino | Chlor | dito | dito | orange |
| 20 | 6-Sulfo-naphth-2-yl-amino | Chlor | dito | dito | orange |
| 21 | 8-Sulfo-naphth-2-yl-amino | Chlor | dito | dito | orange |
| 22 | 6,8-Disulfo-naphth-2-yl-amino | Chlor | dito | dito | orange |
| 23 | 1,6-Disulfo-naphth-2-yl-amino | Chlor | dito | dito | orange |
| 24 | 4,8-Disulfo-naphth-2-yl-amino | Chlor | dito | dito | orange |
| 25 | 6,7-Disulfo-naphth-2-ylamino | Chlor | dito | dito | orange |
| 26 | 5,7-Disulfo-2-naphth-ylamino | Chlor | dito | dito | orange |
| 27 | 3,6-Disulfo-naphth-2-ylamino | Chlor | dito | dito | orange |

| Bsp. | Monoazoverbindung der Formel (A) Rest R*- | Rest Y | Rest -D*- | Rest R- | Farbton |
|---|---|---|---|---|---|
| 28 | 3,6,8-Trisulfo-naphth-2-ylamino | Chlor | 4,6-Disulfo-1,3-phenylen | Wasserstoff | orange |
| 29 | 8-Sulfo-naphth-1-ylamino | Chlor | dito | dito | orange |
| 30 | 6-Sulfo-naphth-1-ylamino | Chlor | dito | dito | orange |
| 31 | 7-Sulfo-naphth-1-ylamino | Chlor | dito | dito | orange |
| 32 | 3,6-Disulfo-naphth-1-ylamino | Chlor | dito | dito | orange |
| 33 | ß-Sulfo-ethylamino | Chlor | dito | dito | orange |
| 34 | 4-Sulfo-benzylamino | Chlor | dito | dito | orange |
| 35 | N-Ethyl-phenyl-amino | Chlor | dito | dito | orange |
| 36 | N-Methyl-N-(ß-sulfo-ethyl)-amino | Chlor | dito | dito | orange |
| 37 | Morpholino | Chlor | dito | dito | orange |
| 38 | Piperidino | Chlor | dito | dito | orange |
| 39 | Amino | Chlor | dito | dito | orange |
| 40 | Methylamino | Chlor | dito | dito | orange |
| 41 | 2-Sulfo-phenylamino | Chlor | 2,5-Disulfo-1,4-phenylen | dito | rotorange |
| 42 | 3-Sulfo-phenylamino | Chlor | dito | dito | rotorange |
| 43 | 2,4-Disulfo-phenylamino | Chlor | dito | dito | rotorange |
| 44 | 2,5-Disulfo-phenylamino | Chlor | dito | dito | rotorange |

| Bsp. | Monoazoverbindung der Formel (A) Rest R*- | Rest Y | Rest -D*- | Rest R- | Farbton |
|---|---|---|---|---|---|
| 45 | 4-Sulfo-phenylamino | Chlor | 2,5-Disulfo-1,4-phenylen | Wasserstoff | rotorange |
| 46 | 4-Sulfo-2-methoxy-phenylamino | Chlor | dito | dito | rotorange |
| 47 | 5-Sulfo-2-methoxy-phenylamino | Chlor | dito | dito | rotorange |
| 48 | 4-Sulfo-2-methyl-phenylamino | Chlor | dito | dito | rotorange |
| 49 | 3-Sulfo-4-methoxy-phenylamino | Chlor | dito | dito | rotorange |
| 50 | 4-Sulfo-2-methoxy-5-methyl-phenylamino | Chlor | dito | dito | rotorange |
| 51 | 4-Sulfo-2,5-dimethoxy-phenylamino | Chlor | dito | dito | rotorange |
| 52 | 5-Sulfo-2,4-dimethoxy-phenylamino | Chlor | dito | dito | rotorange |
| 53 | 4-Sulfo-5-methoxy-2-methyl-phenylamino | Chlor | dito | dito | rotorange |
| 54 | 5-Sulfo-2-chlor-phenylamino | Chlor | dito | dito | rotorange |
| 55 | 3-Sulfo-4-chlor-2-methyl-phenylamino | Chlor | dito | dito | rotorange |
| 56 | 4-Sulfo-5-chlor-2-methoxy-phenylamino | Chlor | dito | dito | rotorange |
| 57 | 6-Sulfo-naphth-2-ylamino | Chlor | dito | dito | rotorange |

| Bsp. | Monoazoverbindung der Formel (A) Rest R*- | Rest Y | Rest -D*- | Rest R- | Farbton |
|---|---|---|---|---|---|
| 58 | 8-Sulfo-naphth-2-ylamino | Chlor | 2,5-Disulfo-1,4-phenylen | Wasserstoff | rotorange |
| 59 | 6,8-Disulfo-naphth-2-ylamino | Chlor | dito | dito | rotorange |
| 60 | 1,6-Disulfo-naphth-2-ylamino | Chlor | dito | dito | rotorange |
| 61 | 4,8-Disulfo-naphth-2-ylamino | Chlor | dito | dito | rotorange |
| 62 | 6,7-Disulfo-naphth-2-ylamino | Chlor | dito | dito | rotorange |
| 63 | 5,7-Disulfo-naphth-2-ylamino | Chlor | dito | dito | rotorange |
| 64 | 3,6-Disulfo-naphth-2-ylamino | Chlor | dito | dito | rotorange |
| 65 | 3,6,8-Trisulfo-naphth-2-ylamino | Chlor | dito | dito | rotorange |
| 66 | 1-Sulfo-naphth-2-ylamino | Chlor | dito | dito | rotorange |
| 67 | 6-Sulfo-naphth-1-ylamino | Chlor | dito | dito | rotorange |
| 68 | 7-Sulfo-naphth-1-ylamino | Chlor | dito | dito | rotorange |
| 69 | 3,6-Disulfo-naphth-1-ylamino | Chlor | dito | dito | orange |
| 70 | ß-Sulfo-ethylamino | Chlor | dito | dito | orange |
| 71 | 4-Sulfo-benzylamino | Chlor | dito | dito | orange |

| Bsp. | Monoazoverbindung der Formel (A) Rest R*- | Rest Y | Rest -D*- | Rest R- | Farbton |
|---|---|---|---|---|---|
| 72 | N-Ethyl-phenylamino | Chlor | 2,5-Disulfo-1,4-phenylen | Wasserstoff | orange |
| 73 | N-Methyl-N-(ß-sulfo-ethyl)-amino | Chlor | dito | dito | orange |
| 74 | Morpholino | Chlor | dito | dito | orange |
| 75 | Piperidino | Chlor | dito | dito | orange |
| 76 | Amino | Chlor | dito | dito | orange |
| 77 | Methylamino | Chlor | dito | dito | orange |
| 78 | 2-Sulfo-phenylamino | Chlor | 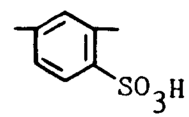 | dito | rot |
| 79 | 3-Sulfo-phenylamino | Chlor | dito | dito | rot |
| 80 | 2,4-Disulfo-phenyl-amino | Chlor | dito | dito | rot |
| 81 | 2,5-Disulfo-phenyl-amino | Chlor | dito | dito | rot |
| 82 | 4-Sulfo-2-methoxy-phenylamino | Chlor | dito | dito | rot |
| 83 | 5-Sulfo-2-methyl-phenylamino | Chlor | dito | dito | rot |
| 84 | 4-Sulfo-2-methyl-phenylamino | Chlor | dito | dito | rot |
| 85 | 3-Sulfo-4-methoxy-phenylamino | Chlor | dito | dito | rot |
| 86 | 4-Sulfo-2-methoxy-5-methyl-phenylamino | Chlor | dito | dito | rot |

| Bsp. | Monoazoverbindung der Formel (A) | | | | Farbton |
|---|---|---|---|---|---|
| | Rest R*- | Rest Y | Rest -D*- | Rest R- | |
| 87 | 4-Sulfo-2,5-dimethoxy-phenylamino | Chlor | 2,5-Disulfo-1,4-phenylen | Wasserstoff | rot |
| 88 | 5-Sulfo-2,4-dimethoxy-phenylamino | Chlor | dito | dito | rot |
| 89 | 4-Sulfo-5-methoxy-2-methyl-phenylamino | Chlor | dito | dito | rot |
| 90 | 5-Sulfo-2-chlor-phenylamino | Chlor | dito | dito | rot |
| 91 | 3-Sulfo-4-chlor-2-methyl-phenylamino | Chlor | dito | dito | rot |
| 92 | 4-Sulfo-5-chlor-2-methoxy-phenylamino | Chlor | dito | dito | rot |
| 93 | 6-Sulfo-naphth-2-ylamino | Chlor | dito | dito | rot |
| 94 | 8-Sulfo-naphth-2-ylamino | Chlor | dito | dito | rot |
| 95 | 3,6-Disulfo-naphth-1-ylamino | Chlor | dito | dito | orange |
| 96 | 6,8-Disulfo-naphth-2-ylamino | Chlor | dito | dito | orange |
| 97 | 1,6-Disulfo-naphth-2-ylamino | Chlor | dito | dito | orange |
| 98 | 4,8-Disulfo-naphth-2-ylamino | Chlor | dito | dito | orange |

| Bsp. | Monoazoverbindung der Formel (A) Rest R*- | Rest Y | Rest -D*- | Rest R- | Farbton |
|---|---|---|---|---|---|
| 99 | 6,7-Disulfo-naphth-2-ylamino | Chlor | 2,5-Disulfo-1,4-phenylen | Wasserstoff | orange |
| 100 | 5,7-Disulfo-naphth-2-ylamino | Chlor | dito | dito | orange |
| 101 | 3,6-Disulfo-naphth-2-ylamino | Chlor | dito | dito | orange |
| 102 | 3,6,8-Trisulfo-naphth-2-ylamino | Chlor | dito | dito | orange |
| 103 | 1-Sulfo-naphth-2-ylamino | Chlor | dito | dito | orange |
| 104 | 6-Sulfo-naphth-1-ylamino | Chlor | dito | dito | orange |
| 105 | 7-Sulfo-naphth-1-ylamino | Chlor | dito | dito | orange |
| 106 | ß-Sulfo-ethylamino | Chlor | dito | dito | orange |
| 107 | 4-Sulfo-benzylamino | Chlor | dito | dito | orange |
| 108 | N-Ethyl-phenylamino | Chlor | dito | dito | orange |
| 109 | N-Methyl-N-(ß-sulfo-ethyl)-amino | Chlor | dito | dito | orange |
| 110 | Amino | Chlor | dito | dito | orange |
| 111 | Methylamino | Chlor | dito | dito | orange |
| 112 | 2-Sulfo-phenylamino | Chlor | 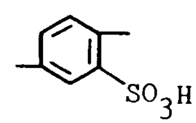 | dito | rot |
| 113 | 3-Sulfo-phenylamino | Chlor | dito | dito | rot |

| Bsp. | Monoazoverbindung der Formel (A) | | | | Farbton |
|---|---|---|---|---|---|
| | Rest R*- | Rest Y | Rest -D*- | Rest R- | |
| 114 | 4-Sulfo-phenylamino | Chlor | dito | Wasserstoff | rot |
| 115 | 2,4-Disulfo-phenylamino | Chlor | dito | dito | rot |
| 116 | 2,5-Disulfo-phenylamino | Chlor | dito | dito | rot |
| 117 | 4-Sulfo-2-methoxy-phenylamino | Chlor | dito | dito | rot |
| 118 | 5-Sulfo-2-methyl-phenylamino | Chlor | dito | dito | rot |
| 119 | 4-Sulfo-2-methyl-phenylamino | Chlor | dito | dito | rot |
| 120 | 3-Sulfo-4-methoxy-phenylamino | Chlor | dito | dito | rot |
| 121 | 4-Sulfo-2-methoxy-5-methyl-phenyl-amino | Chlor | dito | dito | rot |
| 122 | 4-Sulfo-2,5-dimethoxy-phenylamino | Chlor | dito | dito | rot |
| 123 | 5-Sulfo-2,4-dimethoxy-phenylamino | Chlor | dito | dito | rot |
| 124 | 4-Sulfo-5-methoxy-2-methyl-phenylamino | Chlor | dito | dito | rot |
| 125 | 5-Sulfo-2-chlor-phenylamino | Chlor | dito | dito | rot |

| Bsp. | Monoazoverbindung der Formel (A)<br>Rest R*- | Rest Y | Rest -D*- | Rest R- | Farbton |
|---|---|---|---|---|---|
| 126 | 3-Sulfo-4-chlor-2-methyl-phenylamino | Chlor | dito | Wasserstoff | rot |
| 127 | 4-Sulfo-5-chlor-2-methoxy-phenylamino | Chlor | dito | dito | rot |
| 128 | 6-Sulfo-naphth-2-ylamino | Chlor | dito | dito | rot |
| 129 | 8-Sulfo-naphth-2-ylamino | Chlor | dito | dito | rot |
| 130 | 6,8-Disulfo-naphth-2-ylamino | Chlor | dito | dito | rot |
| 131 | 1,6-Disulfo-naphth-2-ylamino | Chlor | dito | dito | rot |
| 132 | 4,8-Disulfo-naphth-2-ylamino | Chlor | dito | dito | rot |
| 133 | 6,7-Disulfo-naphth-2-ylamino | Chlor | dito | dito | rot |
| 134 | 5,7-Disulfo-naphth-2-ylamino | Chlor | dito | dito | rot |
| 135 | 3,6-Disulfo-naphth-2-ylamino | Chlor | dito | dito | rot |
| 136 | 3,6,8-Trisulfo-naphth-2-ylamino | Chlor | dito | dito | rot |
| 137 | 1-Sulfo-naphth-2-ylamino | Chlor | dito | dito | rot |
| 138 | 6-Sulfo-naphth-1-ylamino | Chlor | dito | dito | rot |

| Bsp. | Monoazoverbindung der Formel (A) Rest R*- | Rest Y | Rest -D*- | Rest R- | Farbton |
|---|---|---|---|---|---|
| 139 | 7-Sulfo-naphth-1-ylamino | Chlor | dito | Wasserstoff | rot |
| 140 | 3,6-Disulfo-naphth-1-ylamino | Chlor | dito | dito | orange |
| 141 | ß-Sulfo-ethylamino | Chlor | dito | dito | orange |
| 142 | 4-Sulfo-benzylamino | Chlor | dito | dito | orange |
| 143 | N-Ethyl-phenylamino | Chlor | dito | dito | orange |
| 144 | N-Methyl-N-(ß-sulfo-ethyl)-amino | Chlor | dito | dito | orange |
| 145 | Methylamino | Chlor | dito | dito | orange |
| 146 | Amino | Chlor | dito | dito | orange |
| 147 | 2-Sulfo-phenylamino | Chlor | 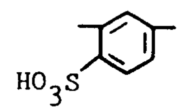 | Methyl | rot |
| 148 | 3-Sulfo-phenylamino | Chlor | dito | Methyl | rot |
| 149 | 4-Sulfo-phenylamino | Chlor | dito | Methyl | rot |
| 150 | 2,4-Disulfo-phenylamino | Chlor | dito | Methyl | rot |
| 151 * | 2,5-Disulfo-phenylamino | Chlor | dito | Methyl | rot |
| 152 | 4-Sulfo-2-methoxy-phenylamino | Chlor | dito | Methyl | rot |
| 153 | 5-Sulfo-2-methyl-phenylamino | Chlor | dito | Methyl | rot |
| 154 | 4-Sulfo-2-methyl-phenylamino | Chlor | dito | Methyl | rot |

* nicht beansprucht

| Bsp. | Monoazoverbindung der Formel (A) Rest R*- | Rest Y | Rest -D*- | Rest R- | Farbton |
|---|---|---|---|---|---|
| 155 | 3-Sulfo-4-methoxy-phenylamino | Chlor | dito | Methyl | rot |
| 156 | 4-Sulfo-2-methoxy-5-methyl-phenylamino | Chlor | dito | Methyl | rot |
| 157 | 4-Sulfo-2,5-dimethoxy-phenylamino | Chlor | dito | Methyl | rot |
| 158 | 5-Sulfo-2,4-dimethoxy-phenylamino | Chlor | dito | Methyl | rot |
| 159 | 4-Sulfo-5-methoxy-2-methyl-phenylamino | Chlor | dito | Methyl | rot |
| 160 | 5-Sulfo-2-chlor-phenylamino | Chlor | dito | Methyl | rot |
| 161 | 3-Sulfo-4-chlor-2-methyl-phenylamino | Chlor | dito | Methyl | rot |
| 162 | 4-Sulfo-5-chlor-2-methoxy-phenylamino | Chlor | dito | Methyl | rot |
| 163 | 6-Sulfo-naphth-2-ylamino | Chlor | dito | Methyl | rot |
| 164 | 8-Sulfo-naphth-2-ylamino | Chlor | dito | Methyl | rot |
| 165 | 6,8-Disulfo-naphth-2-ylamino | Chlor | dito | Methyl | rot |
| 166 | 1,6-Disulfo-naphth-2-ylamino | Chlor | dito | Methyl | rot |

| Bsp. | Monoazoverbindung der Formel (A) Rest R*- | Rest Y | Rest -D*- | Rest R- | Farbton |
|---|---|---|---|---|---|
| 167 | 4,8-Disulfo-naphth-2-ylamino | Chlor | dito | Methyl | rot |
| 168 | 6,7-Disulfo-naphth-2-ylamino | Chlor | dito | Methyl | rot |
| 169 | 5,7-Disulfo-naphth-2-ylamino | Chlor | dito | Methyl | rot |
| 170 | 3,6-Disulfo-naphth-2-ylamino | Chlor | dito | Methyl | rot |
| 171 | 3,6,8-Trisulfo-naphth-2-ylamino | Chlor | dito | Methyl | rot |
| 172 | 1-Sulfo-naphth-2-ylamino | Chlor | dito | Methyl | rot |
| 173 | 6-Sulfo-naphth-1-ylamino | Chlor | dito | Methyl | rot |
| 174 | 7-Sulfo-naphth-1-ylamino | Chlor | dito | Methyl | rot |
| 175 | 3,6-Disulfo-naphth-1-ylamino | Chlor | dito | Methyl | orange |
| 176 | ß-Sulfo-ethylamino | Chlor | dito | Methyl | orange |
| 177 | 4-Sulfo-benzylamino | Chlor | dito | Methyl | orange |
| 178 | N-Ethyl-phenylamino | Chlor | dito | Methyl | orange |
| 179 | N-Methyl-N-(ß-sulfo-ethyl)-amino | Chlor | dito | Methyl | orange |
| 180 | Amino | Chlor | dito | Methyl | orange |
| 181 | 2-Sulfo-phenylamino | Chlor | 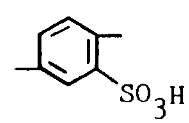 | Methyl | orange |

| Bsp. | Monoazoverbindung der Formel (A) Rest R*- | Rest Y | Rest -D*- | Rest R- | Farbton |
|---|---|---|---|---|---|
| 182 | 3-Sulfo-phenylamino | Chlor | dito | Methyl | orange |
| 183 | 4-Sulfo-phenylamino | Chlor | dito | Methyl | orange |
| 184 | 2,4-Disulfo-phenylamino | Chlor | dito | Methyl | orange |
| 185 | 2,5-Disulfo-phenylamino | Chlor | dito | Methyl | orange |
| 186 | 4-Sulfo-2-methoxy-phenylamino | Chlor | dito | Methyl | orange |
| 187 | 5-Sulfo-2-methyl-phenylamino | Chlor | dito | Methyl | orange |
| 188 | 4-Sulfo-2-methyl-phenylamino | Chlor | dito | Methyl | orange |
| 189 | 3-Sulfo-4-methoxy-phenylamino | Chlor | dito | Methyl | orange |
| 190 | 4-Sulfo-2-methoxy-5-ethyl-phenylamino | Chlor | dito | Methyl | orange |
| 191 | 4-Sulfo-2,5-dimeth-oxy-phenylamino | Chlor | dito | Methyl | orange |
| 192 | 5-Sulfo-2,4-dimeth-oxy-phenylamino | Chlor | dito | Methyl | orange |
| 193 | 4-Sulfo-5-methoxy-2-methyl-phenylamino | Chlor | dito | Methyl | orange |
| 194 | 4-Sulfo-2-chlor-5-methoxy-phenylamino | Chlor | dito | Methyl | orange |
| 195 | 3-Sulfo-4-chlor-2-methyl-phenylamino | Chlor | dito | Methyl | orange |

| Bsp. | Monoazoverbindung der Formel (A) Rest R*- | Rest Y | Rest -D*- | Rest R- | Farbton |
|---|---|---|---|---|---|
| 196 | 4-Sulfo-5-chlor-2-methoxy-phenylamino | Chlor | dito | Methyl | orange |
| 197 | 6-Sulfo-naphth-2-ylamino | Chlor | dito | Methyl | orange |
| 198 | 8-Sulfo-naphth-2-ylamino | Chlor | dito | Methyl | orange |
| 199 | 6,8-Disulfo-naphth-2-ylamino | Chlor | dito | Methyl | orange |
| 200 | 1,6-Disulfo-naphth-2-ylamino | Chlor | dito | Methyl | orange |
| 201 | 4,8-Disulfo-naphth-2-ylamino | Chlor | dito | Methyl | orange |
| 202 | 6,7-Disulfo-naphth-2-ylamino | Chlor | dito | Methyl | orange |
| 203 | 5,7-Disulfo-naphth-2-ylamino | Chlor | dito | Methyl | orange |
| 204 | 3,6-Disulfo-naphth-2-ylamino | Chlor | dito | Methyl | orange |
| 205 | 3,6,8-Trisulfo-naphth-2-ylamino | Chlor | dito | Methyl | orange |
| 206 | 1-Sulfo-naphth-2-ylamino | Chlor | dito | Methyl | orange |
| 207 | 6-Sulfo-naphth-1-ylamino | Chlor | dito | Methyl | orange |
| 208 | 7-Sulfo-naphth-1-ylamino | Chlor | dito | Methyl | orange |

| Bsp. | Monoazoverbindung der Formel (A) Rest R*- | Rest Y | Rest -D*- | Rest R- | Farbton |
|---|---|---|---|---|---|
| 209 | 3,6-Disulfo-naphth-1-ylamino | Chlor | dito | Methyl | orange |
| 210 | ß-Sulfo-ethylamino | Chlor | dito | Methyl | orange |
| 211 | 4-Sulfo-benzylamino | Chlor | dito | Methyl | orange |
| 212 | N-Ethyl-phenylamino | Chlor | dito | Methyl | orange |
| 213 | N-Methyl-N-(ß-sulfoethyl)-amino | Chlor | dito | Methyl | orange |
| 214 | Amino | Chlor | dito | Methyl | orange |
| 215 | 2,5-Disulfo-phenylamino | Chlor | 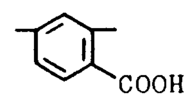 | Wasserstoff | orange |
| 216 | 2,4-Disulfo-phenylamino | Chlor | dito | Wasserstoff | orange |
| 217 | 2,5-Disulfo-phenylamino | Chlor | 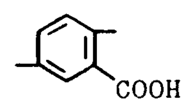 | Wasserstoff | orange |
| 218 | 3-Sulfo-phenyl-amino | Fluor | 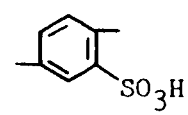 | Methyl | rotorange |
| 219 | 4-Sulfo-phenyl-amino | Fluor | 4,6-Disulfo-1,3-phenylen | Wasserstoff | orange |
| 220 | dito | Fluor | 2,5-Disulfo-1,4-phenylen | Wasserstoff | rot |

Monoazoverbindung der Formel (A)

| Bsp. | Rest R*- | Rest Y | Rest -D*- | Rest R- | Farbton |
|---|---|---|---|---|---|
| 221 | dito | Fluor | 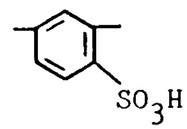 | Wasserstoff | rot |
| 222 | dito | Fluor | 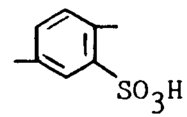 | Wasserstoff | rot |
| 223 | dito | Fluor | 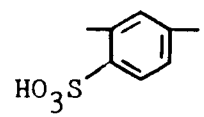 | Methyl | rot |
| 224 | dito | Fluor | 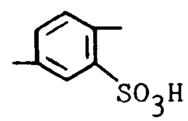 | Methyl | rot |
| 225 | 3-Sulfo-phenyl-amino | Fluor | 4,6-Disulfo-1,3-phenylen | Wasserstoff | rot |
| 226 | dito | Fluor | 2,5-Disulfo-1,4-phenylen | Wasserstoff | rotorange |

| Bsp. | Monoazoverbindung der Formel (A) Rest R*- | Rest Y | Rest -D*- | Rest R- | Farbton |
|---|---|---|---|---|---|
| 227 | dito | Fluor | 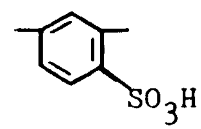 | Wasserstoff | rotorange |
| 228 | dito | Fluor | 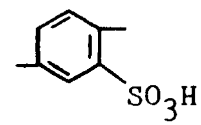 | Wasserstoff | rotorange |
| 229 | dito | Fluor | 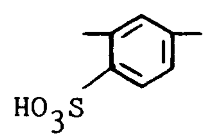 | Methyl | rotorange |

**Patentansprüche**
**Patentansprüche für folgende Vertragsstaaten : BE, CH, DE, FR, GB, IT, LI**

1. Eine Monoazoverbindung entsprechend der allgemeinen Formel (1)

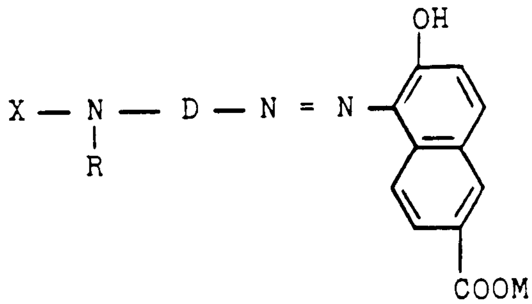

(1)

in welcher bedeuten:

D ist eine para- oder meta-Phenylengruppe, die durch 1 Carboxygruppe oder 1 oder 2 Sulfogruppen substituiert ist, oder ist eine Naphthylengruppe, die in 1- oder 2-Stellung die Azogruppe gebunden enthält und an die in 5- oder 6-Stellung die Gruppierung X-N(R)-gebunden ist und die durch 1 Carboxygruppe oder 1 oder 2 Sulfogruppen substituiert ist;

R ist ein Wasserstoffatom oder eine Alkylgruppe von 1 bis 4 C-Atomen oder eine durch eine Hydroxy-, Cyano-, Carboxy-, Sulfo-, Sulfato- oder Phosphatogruppe oder Phenyl- oder Sulfophenylgruppe substituierte Alkylgruppe von 1 bis 4 C-Atomen;

M ist ein Wasserstoffatom oder ein Alkalimetall oder das Äquivalent eines zweiwertigen Metalls;

X ist eine Gruppe der allgemeinen Formel (2)

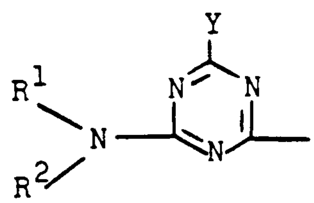

(2)

in welcher

Y ein Halogenatom ist,

$R^1$ ein Wasserstoffatom oder eine Alkylgruppe von 1 bis 4 C-Atomen oder eine Alkylgruppe von 1 bis 4 C-Atomen ist, die durch eine Sulfo-, Carboxy-, Phosphato-, Sulfato-, Hydroxy- oder Cyanogruppe und/oder durch einen gegebenenfalls durch Sulfo, Carboxy, Alkyl von 1 bis 4 C-Atomen, Alkoxy von 1 bis 4 C-Atomen, Chlor und/oder Nitro substituierten Phenyl- oder Naphthylrest substituiert ist, und

$R^2$ ein Wasserstoffatom oder eine Alkylgruppe von 1 bis 4 C-Atomen oder eine Alkylgruppe von 1 bis 4 C-Atomen ist, die durch eine Sulfo-, Carboxy-, Phosphato-, Sulfato-, Hydroxy-, Cyano- oder einen gegebenenfalls durch Sulfo, Carboxy, Alkyl von 1 bis 4 C-Atomen, Alkoxy von 1 bis 4 C-Atomen, Chlor und/oder Nitro substituierten Phenyl- oder Naphthylrest substituiert ist, oder einen Phenylrest bedeutet, der durch 1, 2 oder 3 Substituenten substituiert sein kann, die aus der Gruppe von folgenden Substituenten ausgewählt sind: 2 Alkyl von 1 bis 4 C-Atomen, 2 Alkoxy von 1 bis 4 C-Atomen, 1 Brom, 2 Chlor, 3 Sulfo, 2 Carboxy, 1 Nitro, 1 Alkylsulfonyl von 1 bis 4 C-Atomen, das durch Hydroxy substituiert sein kann, 1 Alkylamino von 1 bis 4 C-Atomen und 1 Alkylamino von 1 bis 4 C-Atomen, das im Alkylrest durch Hydroxy, Sulfato, Sulfo, Phosphato, Alkanoyloxy von 2 bis 5 C-Atomen oder durch carboxysubstituiertes Alkanoylamido von 1 bis 4 C-Atomen im Alkylenrest, substituiert sein kann; oder $R^2$ einen Monosulfo-, Disulfo- oder Trisulfo-naphthyl-Rest bedeutet,

wobei $R^1$ und $R^2$ zueinander gleiche oder voneinander verschiedene Bedeutungen besitzen können, oder

$R^1$ und $R^2$ zusammen mit dem Stickstoffatom einen aus einem Alkylenrest von 3 bis 8 C-Atomen oder einem weiteren Heteroatom und zwei Alkylenresten von 1 bis 4 C-Atomen aufgebauten heterocyclischen Rest bilden,

wobei die Verbindung der Formel (1) mit $R^1$ gleich Wasserstoff, $R^2$ gleich 2,5-Disulfophenyl, Y gleich Chlor, R gleich Methyl und D gleich 2-Sulfo-1,3-phenylen ausgenommen ist.

**2.** Verbindung nach Anspruch 1, dadurch gekennzeichnet, daß Y ein Chloratom ist.

**3.** Verbindung nach Anspruch 1 oder 2, dadurch gekennzeichnet, daß $R^1$ ein Wasserstoffatom und $R^2$ ein Phenylrest ist, der durch eine Sulfogruppe substituiert ist und zusätzlich durch eine weitere Sulfogruppe oder eine Methoxygruppe substituiert sein kann.

**4.** Verbindung nach einem oder mehreren der Ansprüche 1 bis 3, dadurch gekennzeichnet, daß R die Methylgruppe oder bevorzugt ein Wasserstoffatom ist.

**5.** Verbindung nach einem oder mehreren der Ansprüche 1 bis 4, dadurch gekennzeichnet, daß D die meta- oder para-Phenylengruppe ist, die beide durch 1 oder 2 Sulfogruppen substituiert sind.

**6.** Verbindung nach einem oder mehreren der Ansprüche 1 bis 5, dadurch gekennzeichnet, daß M ein Wasserstoffatom oder ein Alkalimetall ist.

**7.** Verfahren zur Herstellung einer Verbindung der allgemeinen Formel (1), dadurch gekennzeichnet, daß man

a) eine Verbindung der allgemeinen Formel (3)

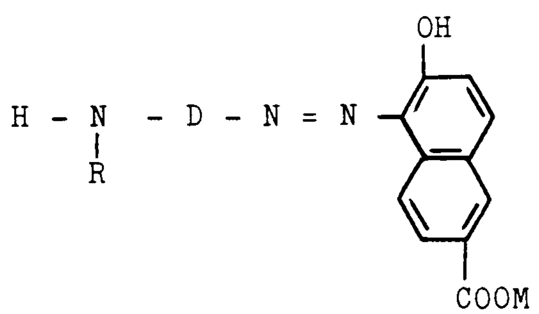

(3)

in welcher R, D und M die in Anspruch 1 genannten Bedeutungen haben, mit einer Verbindung der allgemeinen Formel (4)

X—Y (4)

in welcher X und Y die in Anspruch 1 genannten Bedeutungen besitzen, umsetzt

oder daß man

b) eine aromatische Aminoverbindung der allgemeinen Formel (5)

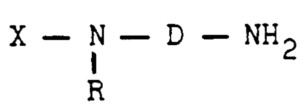

(5)

in welcher X, R und D die in Anspruch 1 genannten Bedeutungen haben, diazotiert und mit der 2-Naphthol-6-carbonsäure oder einem Salz dieser Carbonsäure kuppelt, oder daß man
c) eine Verbindung der allgemeinen Formel (6)

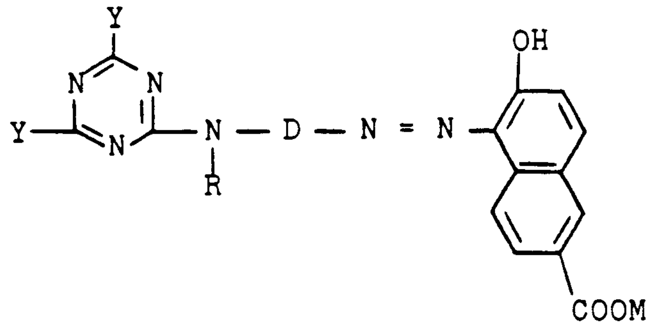

(6)

in welcher beide Y sowie R, D und M die in Anspruch 1 genannten Bedeutungen haben, mit einer Aminoverbindung der allgemeinen Formel $HNR^1R^2$ mit $R^1$ und $R^2$ der in Anspruch 1 genannten Bedeutung umsetzt.

8. Verwendung einer Verbindung entsprechend der Formel (1) gemäß einem oder mehreren der Ansprüche 1 bis 7 zum Färben von hydroxy- und/oder carbonamidgruppenhaltigem Material, insbesondere Fasermaterial.

9. Verfahren zum Färben von hydroxy- und/oder carbonamidgruppenhaltigem Material, insbesondere Fasermaterial, bei welchem man einen Farbstoff auf das Material aufbringt oder in das Material einbringt und ihn mittels Warme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 7 einsetzt.

**Patentansprüche für folgenden Vertragsstaat : ES**

1. Verfahren zur Herstellung einer Monoazoverbindung entsprechend der allgemeinen Formel (1)

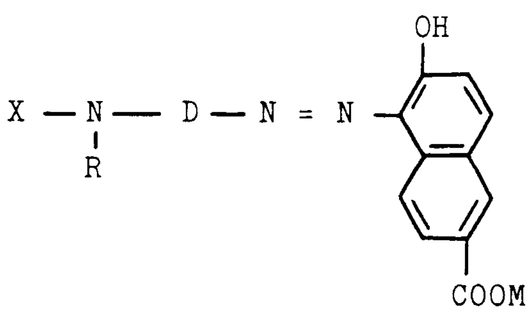

(1)

in welcher bedeuten:

D ist eine para- oder meta-Phenylengruppe, die durch 1 Carboxygruppe oder 1 oder 2 Sulfogruppen substituiert ist, oder ist eine Naphthylengruppe, die in 1- oder 2-Stellung die Azogruppe gebunden enthält und an die in 5- oder 6-Stellung die Gruppierung X-N(R)-gebunden ist und die durch 1 Carboxygruppe oder 1 oder 2 Sulfogruppen substituiert ist;

R ist ein Wasserstoffatom oder eine Alkylgruppe von 1 bis 4 C-Atomen oder eine durch eine Hydroxy-, Cyano-, Carboxy-, Sulfo-, Sulfato- oder Phosphatogruppe oder Phenyl- oder Sulfophenylgruppe substituierte Alkylgruppe von 1 bis 4 C-Atomen;

M ist ein Wasserstoffatom oder ein Alkalimetall oder das Äquivalent eines zweiwertigen Metalls;

X ist eine Gruppe der allgemeinen Formel (2)

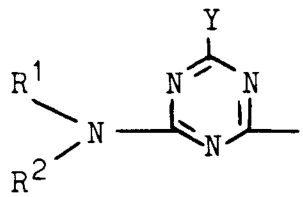

(2)

in welcher

Y — ein Halogenatom ist,

$R^1$ — ein Wasserstoffatom oder eine Alkylgruppe von 1 bis 4 C-Atomen oder eine Alkylgruppe von 1 bis 4 C-Atomen ist, die durch eine Sulfo-, Carboxy-, Phosphato-, Sulfato-, Hydroxy- oder Cyanogruppe und/oder durch einen gegebenenfalls durch Sulfo, Carboxy, Alkyl von 1 bis 4 C-Atomen, Alkoxy von 1 bis 4 C-Atomen, Chlor und/oder Nitro substituierten Phenyl- oder Naphthylrest substituiert ist, und

$R_2$ — ein Wasserstoffatom oder eine Alkylgruppe von 1 bis 4 C-Atomen oder eine Alkylgruppe von 1 bis 4 C-Atomen ist, die durch eine Sulfo-, Carboxy-, Phosphato-, Sulfato-, Hydroxy-, Cyano- oder einen gegebenenfalls durch Sulfo, Carboxy, Alkyl von 1 bis 4 C-Atomen, Alkoxy von 1 bis 4 C-Atomen, Chlor und/oder Nitro substituierten Phenyl- oder Naphthylrest substituiert ist, oder einen Phenylrest bedeutet, der durch 1, 2 oder 3 Substituenten substituiert sein kann, die aus der Gruppe von folgenden Substituenten ausgewählt sind: 2 Alkyl von 1 bis 4 C-Atomen, 2 Alkoxy von 1 bis 4 C-Atomen, 1 Brom, 2 Chlor, 3 Sulfo, 2 Carboxy, 1 Nitro, 1 Alkylsulfonyl von 1 bis 4 C-Atomen, das durch Hydroxy substituiert sein kann, 1 Alkylamino von 1 bis 4 C-Atomen und 1 Alkylamino von 1 bis 4 C-Atomen, das im Alkylrest durch Hydroxy, Sulfato, Sulfo, Phosphato, Alkanoyloxy von 2 bis 5 C-Atomen oder durch carboxysubstituiertes Alkanoylamido von 1 bis 4 C-Atomen im Alkylenrest, substituiert sein kann; oder $R^2$ einen Monosulfo-, Disulfo- oder Trisulfo-naphthyl-Rest bedeutet,

wobei $R^1$ und $R^2$ — zueinander gleiche oder voneinander verschiedene Bedeutungen besitzen können, oder

$R^1$ und $R^2$ — zusammen mit dem Stickstoffatom einen aus einem Alkylenrest von 3 bis 8 C-Atomen oder einem weiteren Heteroatom und zwei Alkylenresten von 1 bis 4 C-Atomen aufgebauten heterocyclischen Rest bilden; ausgenommen

ist die Verbindung der Formel (1) mit $R^1$ gleich Wasserstoff, $R^2$ gleich 2,5-Disulfophenyl, Y gleich Chlor, R gleich Methyl und D gleich 2-Sulfo-1,3-phenylen, dadurch gekennzeichnet, daß man

a) eine Verbindung der allgemeinen Formel (3)

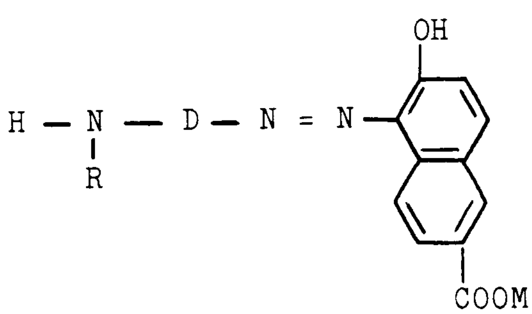

(3)

in welcher R, D und M die oben genannten Bedeutungen haben, mit einer Verbindung der allgemeinen Formel (4)

X—Y (4)

in welcher X und Y die oben genannten Bedeutungen besitzen, umsetzt
oder daß man
b) eine aromatische Aminoverbindung der allgemeinen Formel (5)

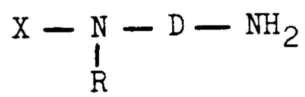

(5)

in welcher X, R und D die oben genannten Bedeutungen haben, diazotiert und mit der 2-Naphthol-6-carbonsäure oder einem Salz dieser Carbonsäure kuppelt,
oder daß man
c) eine Verbindung der allgemeinen Formel (6)

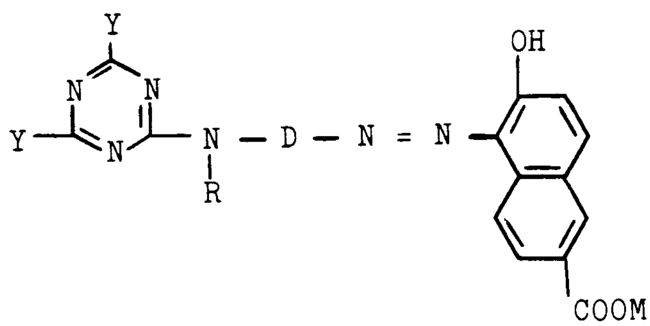

(6)

in welcher beide Y sowie R, D und M die oben genannten Bedeutungen haben, mit einer Aminoverbindung der allgemeinen Formel $HNR^1R^2$ mit $R^1$ und $R^2$ der oben genannten Bedeutung umsetzt.

2. Verfahren nach Anspruch 1, dadurch gekennzeichnet, daß Y ein Chloratom ist.

3. Verfahren nach Anspruch 1 oder 2, dadurch gekennzeichnet, daß $R^1$ ein Wasserstoffatom und $R^2$ ein Phenylrest ist, der durch eine Sulfogruppe substituiert ist und zusätzlich durch eine weitere Sulfogruppe oder eine Methoxygruppe substituiert sein kann.

4. Verfahren nach einem oder mehreren der Ansprüche 1 bis 3, dadurch gekennzeichnet, daß R die Methylgruppe oder bevorzugt ein Wasserstoffatom ist.

5. Verfahren nach einem oder mehreren der Ansprüche 1 bis 4, dadurch gekennzeichnet, daß D die meta- oder para-Phenylengruppe ist, die beide durch 1 oder 2 Sulfogruppen substituiert sind.

6. Verfahren nach einem oder mehreren der Ansprüche 1 bis 5, dadurch gekennzeichnet, daß M ein Wasserstoffatom oder ein Alkalimetall ist.

7. Verwendung einer Verbindung entsprechend der Formel (1) gemäß einem oder mehreren der Ansprüche 1 bis 6 zum Färben von hydroxy- und/oder carbonamidgruppenhaltigem Material, insbesondere Fasermaterial.

8. Verfahren zum Färben von hydroxy- und/oder carbonamidgruppenhaltigem Material, insbesondere Fasermaterial, bei welchem man einen Farbstoff auf das Material aufbringt oder in das Material einbringt und ihn mittels Wärme und/oder mittels einer säurebindenden Verbindung fixiert, dadurch gekennzeichnet, daß man als Farbstoff eine Verbindung entsprechend der Formel (1) gemäß einem oder mehreren der Ansprüche 1 bis 6 einsetzt.

## Claims

### Claims for the following Contracting States : BE, CH, DE, FR, GB, IT, LI

**1.** A monoazo compound conforming to the general formula (1)

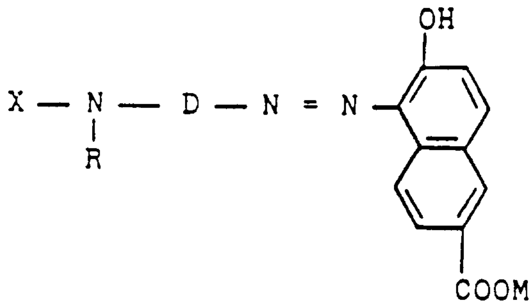

(1)

where the variables have the following meanings:

- D is a para- or meta-phenylene group which is substituted by 1 carboxyl group or 1 or 2 sulfo groups, or is a naphthylene group which contains the azo group bonded in the 1- or 2-position and to which the grouping X-N(R)- is bonded in the 5- or 6-position and which is substituted by 1 carboxyl group or 1 or 2 sulfo groups,
- R is a hydrogen atom or an alkyl group of 1 to 4 carbon atoms, or is a hydroxyl-, cyano-, carboxyl-, sulfo-, sulfato- or phosphato- or phenyl- or sulfophenyl-substituted alkyl group of 1 to 4 carbon atoms,
- M is a hydrogen atom or an alkali metal or the equivalent of a divalent metal,
- X is a group of the formula (2)

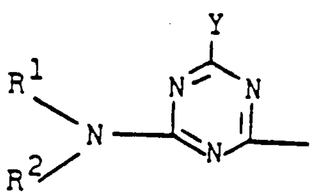

(2)

where

- Y is a halogen atom,
- $R^1$ is a hydrogen atom or an alkyl group of 1 to 4 carbon atoms, or is an alkyl group of 1 to 4 carbon atoms which is substituted by a sulfo, carboxyl, phosphato, sulfato, hydroxyl or cyano group and/or by a phenyl or naphthyl radical which may be substituted by sulfo, carboxyl, alkyl of 1 to 4 carbon atoms, alkoxy of 1 to 4 carbon atoms, chlorine and/or nitro and
- $R^2$ is a hydrogen atom or an alkyl group of 1 to 4 carbon atoms, or is an alkyl group of 1 to 4 carbon atoms which is substituted by a sulfo, carboxyl, phosphato, sulfato, hydroxyl or cyano radical or by a phenyl or naphthyl radical which may be substituted by sulfo, carboxyl, alkyl of 1 to 4 carbon atoms, alkoxy of 1 to 4 carbon atoms, chlorine and/or nitro, or denotes a phenyl radical which can be substituted by 1, 2 or 3 substituents selected from the group consisting of the following substituents: 2 alkyls of 1 to 4 carbon atoms, 2 alkoxies of 1 to 4 carbon atoms, 1 bromine, 2 chlorines, 3 sulfos, 2 carboxyls, 1 nitro, 1 alkylsulfonyl of 1 to 4 carbon atoms which may be substituted by hydroxyl, 1 alkyl-amino of 1 to 4 carbon atoms and 1 alkylamino of 1 to 4 carbon atoms which may be substituted in the alkyl radical by hydroxyl, sulfato, sulfo, phosphato, alkanoyloxy of 2 to 5 carbon atoms or by carboxyl-substituted alkanoylamido of 1 to 4 carbon atoms in the alkylene radical, or $R^2$ denotes a monosulfo-, disulfo- or trisulfo-naphthyl radical,
- $R^1$ and $R^2$ being identical to or different from each other, or
- $R^1$ and $R^2$ together with the nitrogen atom form a hetero cyclic radical composed of an alkylene radical of 3 to 8 carbon atoms or a further heteroatom and two alkylene radicals of 1

to 4 carbon atoms,
with the exception of the compound of the formula (1) in which $R^1$ is hydrogen, $R^2$ is 2,5-disulfophenyl, Y is chlorine, R is methyl and D is 2-sulfo-1,3-phenylene.

**2.** A compound as claimed in claim 1, wherein Y is a chlorine atom.

**3.** A compound as claimed in claim 1 or 2, wherein $R^1$ is a hydrogen atom and $R^2$ is a phenyl radical which is substituted by a sulfo group and may additionally be substituted by a further sulfo group or a methoxy group.

**4.** A compound as claimed in one or more of claims 1 to 3, wherein R is a methyl group or preferably a hydrogen atom.

**5.** A compound as claimed in one or more of claims 1 to 4, wherein D is a meta- or para-phenylene group which in either case is substituted by 1 or 2 sulfo groups.

**6.** A compound as claimed in one or more of claims 1 to 5, wherein M is a hydrogen atom or an alkali metal.

**7.** A process for preparing a compound of the general formula (1) which comprises
a) reacting a compound of the general formula (3)

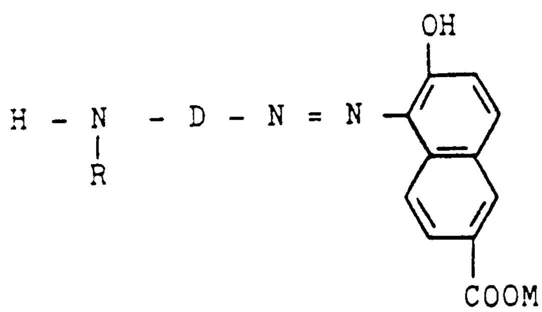

(3)

where R, D and M are as defined in claim 1, with a compound of the general formula (4)

X - Y (4)

where X and Y are as defined in claim 1, or
b) diazotizing an aromatic amino compound of the general formula (5)

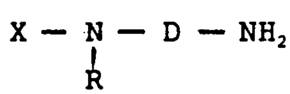

(5)

where X, R and D are as defined in claim 1, and coupling the diazonium compound with 2-naphthol-6-carboxylic acid or a salt of this carboxylic acid,
or

c) reacting a compound of the general formula (6)

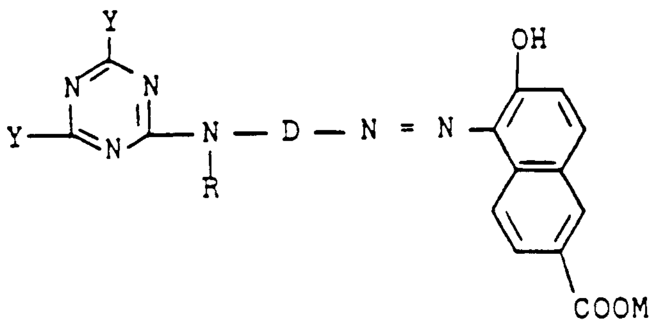

(6)

where the two Ys and also R, D and M are as defined in claim 1, with an amino compound of the formula $HNR^1R^2$ with $R^1$ and $R^2$ of the meaning mentioned in claim 1.

**8.** The use of a compound conforming to the formula (1) as claimed in one or more of claims 1 to 7, for dyeing hydroxyl- and/or carboxamido-containing material, in particular fiber material.

**9.** A process for dyeing hydroxyl- and/or carboxamido-containing material, in particular fiber material, in which a dye is applied to or introduced into the material and fixed by means of heat and/or by means of an acid-binding compound, which comprises using a dye that is a compound conforming to the formula (1) as claimed in one or more of claims 1 to 7.

**Claims for the following Contracting State : ES**

**1.** A process for preparing a monoazo compound conforming to the general formula (1)

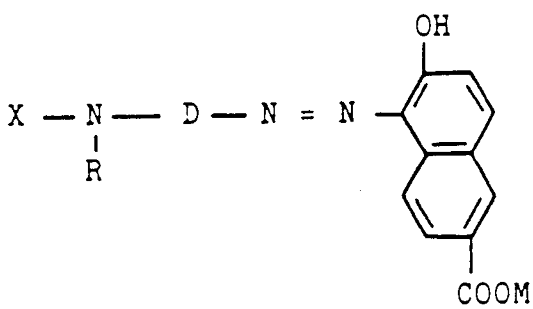

(1)

where the variables have the following meanings:

- D is a para- or meta-phenylene group which is substituted by 1 carboxyl group or 1 or 2 sulfo groups, or is a naphthylene group which contains the azo group bonded in the 1- or 2-position and to which the grouping X-N(R)- is bonded in the 5- or 6-position and which is substituted by 1 carboxyl group or 1 or 2 sulfo groups,
- R is a hydrogen atom or an alkyl group of 1 to 4 carbon atoms, or is a hydroxyl-, cyano-, carboxyl-, sulfo-, sulfato- or phosphato- or phenyl- or sulfophenyl-substituted alkyl group of 1 to 4 carbon atoms,
- M is a hydrogen atom or an alkali metal or the equivalent of a divalent metal,
- X is a group of the general formula (2)

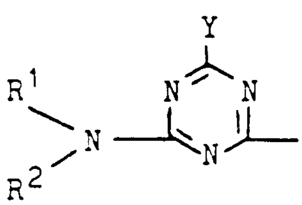

(2)

where

Y is a halogen atom,

$R^1$ is a hydrogen atom or an alkyl group of 1 to 4 carbon atoms, or is an alkyl group of 1 to 4 carbon atoms which is substituted by a sulfo, carboxyl, phosphato, sulfato, hydroxyl or cyano group and/or by a phenyl or naphthyl radical which may be substituted by sulfo, carboxyl, alkyl of 1 to 4 carbon atoms, alkoxy of 1 to 4 carbon atoms, chlorine and/or nitro and

$R^2$ is a hydrogen atom or an alkyl group of 1 to 4 carbon atoms, or is an alkyl group of 1 to 4 carbon atoms which is substituted by a sulfo, carboxyl, phosphato, sulfato, hydroxyl or cyano radical or by a phenyl or naphthyl radical which may be substituted by sulfo, carboxyl, alkyl of 1 to 4 carbon atoms, alkoxy of 1 to 4 carbon atoms, chlorine and/or nitro, or denotes a phenyl radical which can be substituted by 1, 2 or 3 substituents selected from the group consisting of the following substituents: 2 alkyls of 1 to 4 carbon atoms, 2 alkoxies of 1 to 4 carbon atoms, 1 bromine, 2 chlorines, 3 sulfos, 2 carboxyls, 1 nitro, 1 alkylsulfonyl of 1 to 4 carbon atoms which may be substituted by hydroxyl, 1 alkylamino of 1 to 4 carbon atoms and 1 alkylamino of 1 to 4 carbon atoms which may be substituted in the alkyl radical by hydroxyl, sulfato, sulfo, phosphato, alkanoyloxy of 2 to 5 carbon atoms or by carboxyl-substituted alkanoylamido of 1 to 4 carbon atoms in the alkyl radical, or $R^2$ denotes a monosulfo-, disulfo- or trisulfo-naphthyl radical,

$R^1$ and $R^2$ being identical to or different from each other, or

$R^1$ and $R^2$ together with the nitrogen atom form a hetero cyclic radical composed of an alkylene radical of 3 to 8 carbon atoms or a further heteroatom and two alkylene radicals of 1 to 4 carbon atoms, subject to the proviso that the compound of the formula (1) in which $R^1$ is hydrogen, $R^2$ is 2,5-disulfophenyl, Y is chlorine, R is methyl and D is 2-sulfo-1,3-phenylene is excepted,

which comprises

a) reacting a compound of the formula (3)

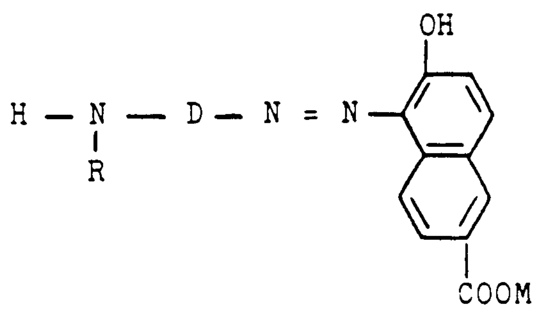

(3)

where R, D and M are as defined above, with a compound of the general formula (4)

X - Y (4)

where X and Y are as defined above,

or

b) diazotizing an aromatic amino compound of the general formula (5)

$$X - \underset{R}{N} - D - NH_2 \qquad (5)$$

where X, R and D are as defined above, and coupling the diazonium compound with 2-naphthol-6-carboxylic acid or a salt of this carboxylic acid,

or

c) reacting a compound of the general formula (6)

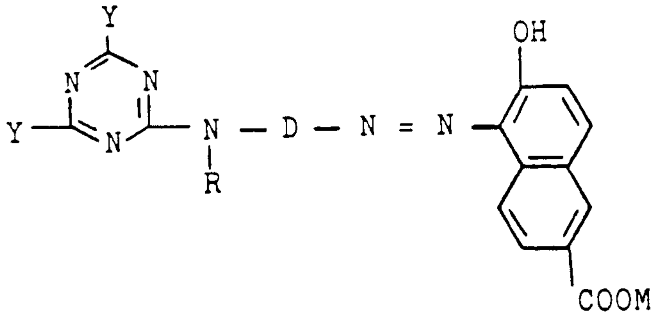

(6)

where the two Ys and also R, D and M are as defined above, with an amino compound of the general formula $HNR^1R^2$ with $R^1$ and $R^2$ of the abovementioned meaning.

2. The process as claimed in claim 1, wherein Y is a chlorine atom.

3. The process as claimed in claim 1 or 2, wherein $R^1$ is a hydrogen atom and $R^2$ is a phenyl radical which is substituted by a sulfo group and may additionally be substituted by a further sulfo group or a methoxy group.

4. The process as claimed in one or more of claims 1 to 3, wherein R is a methyl group or preferably a hydrogen atom.

5. The process as claimed in one or more of claims 1 to 4, wherein D is a meta- or para-phenylene group which in either case is substituted by 1 or 2 sulfo groups.

6. The process as claimed in one or more of claims 1 to 5, wherein M is a hydrogen atom or an alkali metal.

7. The use of a compound conforming to the formula (1) as in one or more of claims 1 to 6, for dyeing hydroxyl- and/or carboxamido-containing material, in particular fiber material.

8. A process for dyeing hydroxyl- and/or carboxamido-containing material, in particular fiber material, in which a dye is applied to or introduced into the material and fixed by means of heat and/or by means of an acid-binding compound, which comprises using a dye that is a compound conforming to the formula (1) as set forth in one or more of claims 1 to 6.

**Revendications**
**Revendications pour les Etats contractants suivants : BE, CH, DE, FR, GB, IT, LI**

1. Composé monoazoïque correspondant à la formule générale (1)

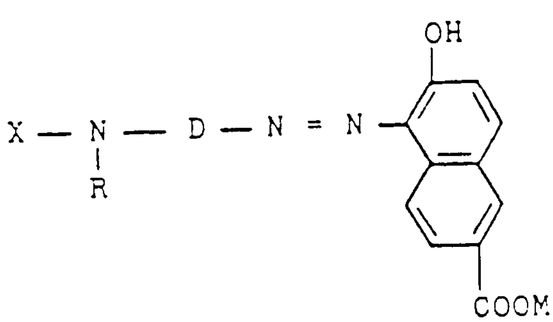

(1)

dans laquelle :

D est un groupe para- ou métaphénylène, substitué par un groupe carboxy ou 1 ou 2 groupes

sulfo, ou encore est un groupe naphtylène contenant le groupe azoïque lié en position 1 ou 2 et auquel est lie, en position 5 ou 6, le groupement X-N(R)-, et qui est substitué par un groupe carboxy ou 1 ou 2 groupes sulfo ;

R est un atome d'hydrogène ou un groupe alkyle ayant de 1 à 4 atomes de carbone ou encore un groupe alkyle ayant de 1 à 4 atomes de carbone, substitué par un groupe hydroxy, cyano, carboxy, sulfo, sulfato ou phosphato, ou encore par un groupe phényle ou sulfo-phényle ;

M est un atome d'hydrogène ou un métal alcalin, ou encore l'équivalent d'un métal divalent ;

X est un groupe de formule générale (2)

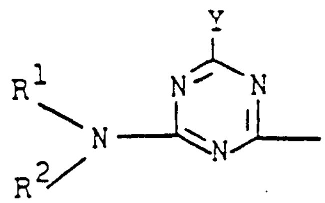

(2)

dans laquelle

Y est un atome d'halogène,

$R^1$ est un atome d'hydrogène ou un groupe alkyle ayant de 1 à 4 atomes de carbone ou un groupe alkyle ayant de 1 à 4 atomes de carbone et substitué par un groupe sulfo, carboxy, phosphato, sulfato, hydroxy ou cyano et/ou par un radical phényle ou naphtyle éventuellement substitué par des substituants sulfo, carboxy, alkyle ayant de 1 à 4 atomes de carbone, alcoxy ayant de 1 à 4 atomes de carbone, chloro et/ou nitro, et

$R^2$ est un atome d'hydrogène ou un groupe alkyle ayant de 1 à 4 atomes de carbone ou encore un groupe alkyle ayant de 1 à 4 atomes de carbone, substitué par un radical sulfo, carboxy, phosphato, sulfato, hydroxy, cyano, ou par un radical phényle ou naphtyle éventuellement substitué par des substituants sulfo, carboxy, alkyle ayant de 1 à 4 atomes de carbone, alcoxy ayant de 1 à 4 atomes de carbone, chloro et/ou nitro, ou encore un radical phényle, lequel peut être substitué par 1, 2 ou 3 substituants choisis parmi l'ensemble des substituants suivants : 2 substituants alkyle ayant de 1 à 4 atomes de carbone, 2 substituants alcoxy ayant de 1 à 4 atomes de carbone, 1 substituant bromo, 2 substituants chloro, 3 substituants sulfo, 2 substituants carboxy, 1 substituant nitro, 1 substituant alkylsulfonyle ayant de 1 à 4 atomes de carbone et pouvant être substitué par un substituant hydroxy, 1 substituant alkylamino ayant de 1 à 4 atomes de carbone et 1 substituant alkylamino ayant de 1 à 4 atomes de carbone, qui peut être substitué dans le fragment alkyle par des radicaux hydroxy, sulfato, sulfo, phosphato, alcanoyloxy ayant de 2 à 5 atomes de carbone, ou dans le fragment alkylène par des radicaux alcanoylamido à substitution carboxy ayant de 1 à 4 atomes de carbone ; ou encore $R^2$ est un radical monosulfo-, disulfo ou trisulfonaphtyle, les radicaux $R^1$ et $R^2$ pouvant avoir des significations identiques ou différentes, ou bien

$R^1$ et $R^2$, avec l'atome d'azote, forment un résidu hétérocyclique constitué d'un fragment alkylène ayant de 3 à 8 atomes de carbone ou d'un autre hétéroatome et de deux fragments alkyléne ayant de 1 à 4 atomes de carbone,

à l'exclusion des composés de formule (1) dans lesquels $R^1$ est un hydrogène, $R^2$ est le radical disulfo-2,5 phényle, Y est le chlore, R est le radical méthyle et D est le radical sulfo-2 phénylène-1,3.

2. Composé selon la revendication 1, caractérisé en ce que Y est un atome de chlore.

3. Composé selon les revendications 1 ou 2, caractérisé en ce que $R^1$ est un atome d'hydrogène et $R^2$ est un radical phényle substitué par un groupe sulfo et pouvant être en outre substitué par un autre groupe sulfo ou un groupe méthoxy.

4. Composé selon l'une ou plusieurs des revendications 1 à 3, caractérisé en ce que R est le groupe méthyle ou de préférence un atome d'hydrogène.

5. Composé selon l'une ou plusieurs des revendications 1 à 4, caractérisé en ce que D est le groupe méta- ou paraphénylène, qui tous les deux sont substitués par 1 ou 2 groupes sulfo.

6. Composé selon l'une ou plusieurs des revendications 1 à 5, caractérisé en ce que M est un atome d'hydrogène ou un métal alcalin.

7. Procédé pour préparer un composé de formule générale (1), caractérisé en ce que
a) on fait réagir un composé de formule générale (3)

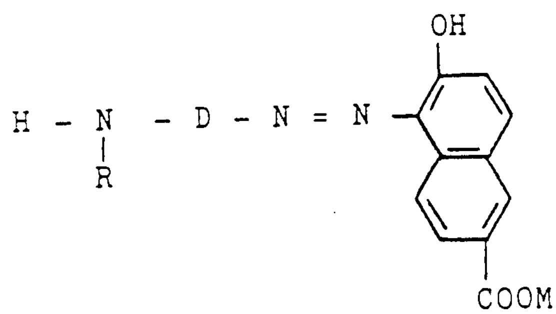

(3)

dans laquelle R, D et M ont les significations données dans la revendication 1, avec un composé de formule générale (4)

X - Y (4)

dans laquelle X et Y ont les significations données dans la revendication 1, ou
b) on diazote un composé aminé aromatique de formule générale (5)

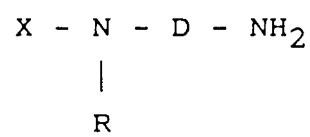

(5)

dans laquelle X, R et D ont les significations données dans la revendication 1, et on le copule avec l'acide naphtol-2 carboxylique-6 ou avec un sel de cet acide carboxylique,
ou
c) on fait réagir un composé de formule générale (6)

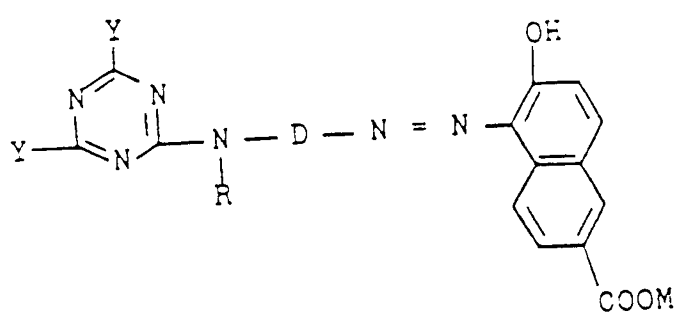

(6)

dans laquelle les deux radicaux Y, ainsi que R, D et M ont les significations données dans la revendication 1, avec un composé aminé de formule générale $HNR^1R^2$ dans laquelle $R^1$ et $R^2$ ont les significations données dans la revendication 1.

8. Utilisation d'un composé de formule (1) selon l'une ou plusieurs des revendications 1 à 7 pour teindre un matériau hydroxylé et/ou contenant des groupes carboxamide, notamment un matériau fibreux.

9. Procédé pour teindre un matériau contenant des groupes hydroxy et/ou carboxamido, notamment un matériau fibreux, dans lequel on applique un colorant sur le matériau ou on l'incorpore dans le matériau et on le fixe à l'aide de chaleur et/ou à l'aide d'un composé fixant les acides, caractérisé en ce qu'on

utilise comme colorant un composé de formule (1) selon l'une ou plusieurs des revendications 1 à 7.

**Revendications pour l'Etat contractant suivant : ES**

**1.** Procédé pour préparer un composé monoazoïque correspondant à la formule générale (1)

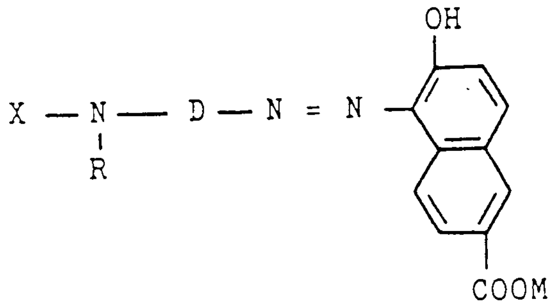

(1)

dans laquelle :

D est un groupe para- ou métaphénylène, substitué par un groupe carboxy ou 1 ou 2 groupes sulfo, ou encore est un groupe naphtylène contenant le groupe azoïque lié en position 1 ou 2 et auquel est lié, en position 5 ou 6, le groupement X-N(R)-, et qui est substitué par un groupe carboxy ou 1 ou 2 groupes sulfo ;

R est un atome d'hydrogène ou un groupe alkyle ayant de 1 à 4 atomes de carbone ou encore un groupe alkyle ayant de 1 à 4 atomes de carbone, substitué par un groupe hydroxy, cyano, carboxy, sulfo, sulfato ou phosphato, ou encore par un groupe phényle ou sulfophényle ;

M est un atome d'hydrogène ou un métal alcalin, ou encore l'équivalent d'un métal divalent ;

X est un groupe de formule générale (2)

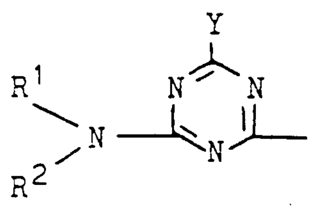

(2)

dans laquelle

Y est un atome d'halogène,

$R^1$ est un atome d'hydrogène ou un groupe alkyle ayant de 1 à 4 atomes de carbone ou un groupe alkyle ayant de 1 à 4 atomes de carbone et substitué par un groupe sulfo, carboxy, phosphato, sulfato, hydroxy ou cyano et/ou par un radical phényle ou naphtyle éventuellement substitué par des substituants sulfo, carboxy, alkyle ayant de 1 à 4 atomes de carbone, alcoxy ayant de 1 à 4 atomes de carbone, chloro et/ou nitro, et

$R^2$ est un atome d'hydrogène ou un groupe alkyle ayant de 1 à 4 atomes de carbone ou encore un groupe alkyle ayant de 1 à 4 atomes de carbone, substitué par un radical sulfo, carboxy, phosphato, sulfato, hydroxy, cyano, ou par un radical phényle ou naphtyle éventuellement substitué par des substituants sulfo, carboxy, alkyle ayant de 1 à 4 atomes de carbone, alcoxy ayant de 1 à 4 atomes de carbone, chloro et/ou nitro, ou encore un radical phényle, lequel peut être substitué par 1, 2 ou 3 substituants choisis parmi l'ensemble des substituants suivants : 2 substituants alkyle ayant de 1 à 4 atomes de carbone, 2 substituants alcoxy ayant de 1 à 4 atomes de carbone, 1 substituant bromo, 2 substituants chloro, 3 substituants sulfo, 2 substituants carboxy, 1 substituant nitro, 1 substituant alkylsulfonyle ayant de 1 à 4 atomes de carbone et pouvant être substitué par un substituant hydroxy, 1 substituant alkylamino ayant de 1 à 4 atomes de carbone et 1 substituant alkylamino ayant de 1 à 4 atomes de carbone, qui peut être substitué dans le fragment alkyle par des radicaux hydroxy, sulfato, sulfo, phosphato, alcanoyloxy ayant de 2 à 5 atomes de carbone, ou dans le fragment alkylène par des radicaux alcanoylamido à substitution carboxy ayant de 1 à 4 atomes de carbone ; ou encore $R^2$ est un radical monosulfo-, disulfo ou trisulfonaphtyle, les radicaux $R^1$ et $R^2$ pouvant avoir des significations identiques ou différentes, ou bien

$R^1$ et $R^2$, avec l'atome d'azote, forment un résidu hétérocyclique constitué d'un fragment alkylène ayant de 3 à 8 atomes de carbone ou d'un autre hétéroatome et de deux fragments alkylène ayant de 1 à 4 atomes de carbone,

à l'exclusion des composés de formule (1) dans lesquels $R^1$ est un hydrogène, $R^2$ est le radical disulfo-2,5 phényle, Y est le chlore, R est le radical méthyle et D est le radical sulfo-2 phénylène-1,3,

caractérisé en ce que :

a) on fait réagir un composé de formule générale (3)

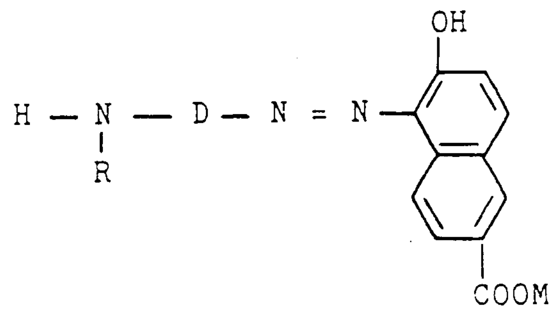

(3)

dans laquelle R, D et M ont les significations données dans la revendication 1, avec un composé de formule générale (4)

X - Y (4)

dans laquelle X et Y ont les significations données dans la revendication 1, ou

b) on diazote un composé aminé aromatique de formule générale (5)

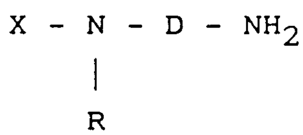

(5)

dans laquelle X, R et D ont les significations données dans la revendication 1, et on le copule avec l'acide naphtol-2 carboxylique-6 ou avec un sel de cet acide carboxylique,

ou

c) on fait réagir un composé de formule générale (6)

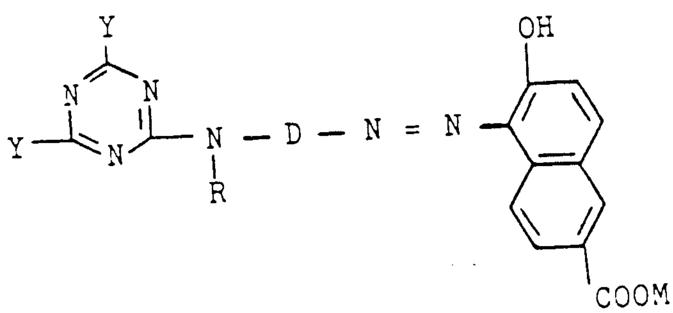

(6)

dans laquelle les deux radicaux Y, ainsi que R, D et M ont les significations données dans la revendication 1, avec un composé aminé de formule générale $HNR^1R^2$ dans laquelle $R^1$ et $R^2$ ont les significations données ci-dessus.

**2.** Procédé selon la revendication 1, caractérisé en ce que Y est un atome de chlore.

3. Procédé selon les revendications 1 ou 2, caractérisé en ce que $R^1$ est un atome d'hydrogène et $R^2$ est un radical phényle substitué par un groupe sulfo et pouvant être en outre substitué par un autre groupe sulfo ou un groupe méthoxy.

4. Procédé selon l'une ou plusieurs des revendications 1 à 3, caractérisé en ce que R est le groupe méthyle ou de préférence un atome d'hydrogène.

5. Procédé selon l'une ou plusieurs des revendications 1 à 4, caractérisé en ce que D est le groupe méta- ou paraphénylène, qui tous les deux sont substitués par 1 ou 2 groupes sulfo.

6. Procédé selon l'une ou plusieurs des revendications 1 à 5, caractérisé en ce que M est un atome d'hydrogène ou un métal alcalin.

7. Utilisation d'un composé de formule (1) selon l'une ou plusieurs des revendications 1 à 6 pour teindre un matériau hydroxylé et/ou contenant des groupes carboxamide, notamment un matériau fibreux.

8. Procédé pour teindre un matériau contenant des groupes hydroxy et/ou carboxamido, notamment un matériau fibreux, dans lequel on applique un colorant sur le matériau ou on l'incorpore dans le matériau et on le fixe à l'aide de chaleur et/ou à l'aide d'un composé fixant les acides, caractérisé en ce qu'on utilise comme colorant un composé de formule (1) selon l'une ou plusieurs des revendications 1 à 6.